# EUROPÄISCHE PATENTANMELDUNG

(11) **EP 2 645 006 A2**
(43) Veröffentlichungstag der Anmeldung: **02.10.2013**
(21) Anmeldenummer: 13162043.7
(22) Anmeldetag: 02.04.2013
(51) Int. Cl.: F24D 11/00

(54) **Heizsystem**

(30) Priorität: 30.03.2012 DE 102012102822
(71) Anmelder: Scharrer, Jochen, 92318 Neumarkt (DE)
(72) Erfinder: Scharrer, Jochen, 92318 Neumarkt (DE); Scharrer, Hellfried, 92318 Neumarkt (DE)
(74) Vertreter: Lang, Christian

(57) **Zusammenfassung**

Die vorliegende Erfindung betrifft ein Heizsystem für die Raumheizung und/oder Warmwasserbereitung unter Nutzung von Solarenergie mit mindestens einem Wärmetauscher (4) zur Übertragung von Wärmeenergie, die ein Wärmeträgermedium durch Sonnenenergie aufgenommen hat, von dem Wärmeträgermedium auf ein Verbrauchsmedium und mindestens einem Speicher (10) zur Speicherung der Wärme, wobei Wärmetauscher (4) und Speicher (10) getrennt voneinander als separate Module aufgebaut sind bzw. ein Heizsystem mit mindestens einem Wärmetauscher (4), der einen ersten Aufnahmebereich (7) für ein erstes Medium, welches von einer Wärmequelle erwärmt werden kann, und einem zweiten Aufnahmebereich (8) für ein zweites Medium aufweist, welches die Wärme von dem ersten Medium aufnimmt, speichert und an Verbraucher abgibt, wobei der erste Aufnahmebereich (7) und/oder der zweite Aufnahmebereich (8) in ihrem Strömungsquerschnitt gegenüber dem Strömungsquerschnitt der jeweiligen Zuflüsse so stark vergrößert sind, dass die Durchlaufgeschwindigkeit im ersten und/oder zweiten Aufnahmebereich sehr viel kleiner als in den jeweiligen Zuflüssen ist, und zwar so, dass sich eine Schichtung des ersten und/oder zweiten Mediums im jeweiligen Aufnahmebereich gemäß der temperaturbedingten Dichte einstellt. Die Erfindung betrifft ferner ein Heizsystem mit einem Heizkreislauf, durch den ein Heizmedium geführt wird und in dem Heizelemente (14) angeordnet sind, bei denen das Heizmedium Wärmeenergie abgibt, wobei im Kreislauf in Durchlaufrichtung nach den Heizelementen ein Heizungsrücklaufberuhigungsmodul (18) angeordnet ist, und wobei das Heizungsrücklaufberuhigungsmodul mit einer Wärmequelle gekoppelt ist, die ein Heizmedium mit hoher Temperatur aufweist, und zwar so, dass das Heizmedium der Wärmequelle bei gegenüber dem Heizmedium im Heizungsrücklaufberuhigungsmodul erhöhter Temperatur auf Grund der Schwerkraft in das Heizungsrücklaufberuhigungsmodul fließen kann, und wobei bei dem Heizungsrücklaufberuhigungsmodul (18) der Strömungsquerschnitt gegenüber dem Heizkreislauf so stark erhöht ist, dass die Durchlaufgeschwindigkeit sehr viel kleiner als im übrigen Heizkreislauf ist, und zwar so, dass sich eine Schichtung des Heizmediums im Heizungsrücklaufberuhigungsmodul gemäß der temperaturbedingten Dichte einstellt. Darüber hinaus betrifft die Erfindung entsprechende Komponenten der Heizsystem, wie Wärmetauscher und Wärmespeicher, sowie Verfahren zum Betrieb der Heizsysteme.

## Beschreibung

### GEBIET DER ERFINDUNG

Die vorliegende Erfindung betrifft ein Heizsystem für die Heizung von Räumen in Gebäuden oder die Warmwasserbereitung in Gebäuden, insbesondere unter Nutzung von Solarenergie, sowie entsprechende Komponenten hierfür, wie beispielsweise Wärmetauscher und Wärmespeicher.

### STAND DER TECHNIK

Für die Heizung von Gebäuden und die Warmwasserbereitung sind unterschiedlichste Systeme aus dem Stand der Technik bekannt. Durch die Energieknappheit und das Bedürfnis, entsprechende Ressourcen wie Erdgas oder Erdöl zu schonen, sind in den letzten Jahren auch vielfältige Anstrengungen zur Nutzung regenerierbarer Energien entstanden.

Insbesondere die Solarenergie ist als Energiequelle besonders interessant, da die Sonnenenergie in nahezu unbegrenzter Menge zur Verfügung steht. Neben Photovoltaikanlagen werden Solarkollektoren eingesetzt, um ein Wärmeträgermedium, wie beispielsweise ein Fluid wie Wasser oder eine frostsichere Flüssigkeit, im Sonnenkollektor zu erwärmen, sodass es als Wärmequellenmedium bezeichnet werden kann. Das entsprechend erwärmte Wärmequellenmedium wird dann zur Erwärmung eines weiteren Wärmeträgermediums, nämlich eines Verbrauchsmediums eingesetzt, wie beispielsweise von Wasser zur Warmwasseraufbereitung, oder eines Heizmediums, wie beispielsweise Heizungswasser, das durch einen Heizungskreislauf zirkuliert.

Hierzu werden nach dem Stand der Technik üblicherweise Systeme eingesetzt, bei denen das Solarwärmeträgermedium, das von der Sonnenenergie erwärmt wird, durch einen Wärmetauscher, der in einem Speicherbehälter integriert ist, geführt wird, um das in dem Speicherbehälter enthaltene Verbrauchsmedium, wie beispielsweise Frischwasser oder Heizungswasser, zu erwärmen.

Bei diesen Systemen werden üblicherweise aufwändige Regelungssysteme eingesetzt, die dafür sorgen sollen, dass eine effektive Wärmeaufnahme möglich ist. Dazu wird durch das Regelungssystem die Bewegung des Solarwärmeträgermediums und der Verbrauchsmedien in Abhängigkeit von der Temperatur durch Pumpen und entsprechende Verteiler, wie Wegeventile, bewirkt.

Derartige Systeme sind jedoch häufig wenig effektiv und durch eine Vielzahl von Pumpen, Ventilen und Regelungssystemen sehr aufwändig.

### OFFENBARUNG DER ERFINDUNG

### AUFGABE DER ERFINDUNG

Es ist deshalb Aufgabe der vorliegenden Erfindung, ein Heizsystem und entsprechende Komponenten hierfür bereitzustellen, die es ermöglichen, Heizenergie und insbesondere Solarenergie effektiv zu nutzen und einen möglichst automatisierten, aber gleichzeitig unaufwändigen Betrieb zu gewährleisten. Ein entsprechendes Heizsystem und die Komponenten hierfür sollen weitgehend ohne großen Regelungsaufwand und externe Antriebe auskommen.

### TECHNISCHE LÖSUNG

Diese Aufgabe wird gelöst durch ein Heizsystem mit den Merkmalen der Ansprüche 1, 3 oder 5 sowie einem Wärmetauscher mit den Merkmalen des Anspruchs 8 und einem Wärmespeicher mit den Merkmalen des Anspruchs 9 oder 10. Darüber hinaus wird ein Verfahren zur Übertragung und Speicherung von Wärme mit den Merkmalen der Ansprüche 11 oder 13 sowie ein Verfahren zum Betrieb eines Heizsystems nach einem der Ansprüche 14 oder 15 angegeben. Vorteilhafte Ausgestaltungen sind Gegenstand der abhängigen Ansprüche.

Bei der vorliegenden Beschreibung der Erfindung wird jedes Medium, welches Wärme aufnehmen und wieder abgeben kann, als Wärmeträgermedium bezeichnet. Wärmeträgermedien, die Wärme von einer Wärmequelle aufnehmen, werden speziell als Wärmequellenmedien, oder bei Verwendung von Solarenergie auch als Solarwärmeträger oder Solarwärmeträgermedien bezeichnet, während Wärmeträger oder Wärmeträgermedien, die die Wärme an Verbrauchsstellen transportieren, als Verbrauchsmedien bezeichnet werden.

Nach einem ersten Aspekt der vorliegenden Erfindung, für den selbstständig und im Zusammenhang mit den anderen Aspekten der vorliegenden Erfindung Schutz begehrt wird, werden bei einem Heizsystem ein Wärmetauscher zur Übertragung von Wärmeenergie von einem Wärmequellenmedium, das Sonnenenergie aufgenommen hat, auf ein Verbrauchsmedium und ein Wärmespeicher eingesetzt, wobei Wärmetauscher und Wärmespeicher getrennt voneinander als separate Module ausgeführt sind, so dass die Funktionen des Wärmeübertrags und der Speicherung klar voneinander getrennt sind. Dadurch wird vermieden, dass sich ein ungünstiger Wärmeübertragungskoeffizient bei einer Kombination aus Wärmetauscher und Speicher ergibt und gleichzeitig wird verhindert, dass die effektive Wärmespeicherung durch den Wärmetauscher behindert wird.

Zusätzlich kann bei einem Heizsystem mit einem Heizkreislauf, durch welchen ein Heizmedium als Verbrauchsmedium zirkuliert, ein Heizungsrücklaufanhebungs- und - beruhigungsmodul (HRB-Modul) als weiteres Modul vorgesehen sein, welches eine effektive Wärmeübertragung von dem Solarwärmeträgermedium, das durch die Solarenergie aufgeheizt worden ist, auf das Verbrauchsmedium, also beispielsweise das Heizungswasser, in einem Kreislauf garantiert.

Ein derartiges Heizungsrücklaufanhebungs- und -beruhigungsmodul kann dabei so ausgebildet sein, dass sich der Strömungsquerschnitt für das Verbrauchsmedium in dem Kreislauf im HRB-Modul sehr stark vergrößert, sodass die Strömungsgeschwindigkeit des Verbrauchsmediums im HRB-Modul stark abgesenkt wird. Gleichzeitig wird durch den großen Strömungsquerschnitt ermöglicht, dass sich das Verbrauchsmedium entsprechend der temperaturbedingten Dichte in einer Schichtstruktur anordnet, also mit hoher Temperatur und geringer Dichte in oberen Bereichen und mit niedriger Temperatur und großer Dichte in niedrigeren Bereichen. Entsprechend lässt sich in Kombination mit einem Wärmetauscher aus diesem in effektiver Weise geeignetes Verbrauchsmedium, d. h. das Verbrauchsmedium mit einer geeigneten Temperatur, in den Heizkreislauf zuführen. Bei einem HRB-Modul kann beispielsweise das Verbrauchsmedium von dem Wärmetauscher direkt in den Heizkreislauf eingeführt werden, ohne dass es einer zusätzlichen Wärmeübertragung auf ein neues Medium bedarf.

Der Wärmetauscher und/oder der Speicher können ebenfalls so ausgebildet sein, dass sich das Wärmeträgermedium selbstständig gemäß der temperaturabhängigen Dichte schichtet, und zwar zumindest hinsichtlich des Verbrauchsmediums, welches die Wärme von dem solar aufgeheizten Solarwärmeträgermedium aufnimmt. Allerdings kann auch das Solarwärmeträgermedium in einer geschichteten Struktur in Abhängigkeit von der temperaturabhängigen Dichte im entsprechenden Aufnahmebereich des Wärmetauscher angeordnet sein. Da das Verbrauchsmedium des Wärmetauschers für einen Heizkreislauf bei Vorsehen eines HRB-Moduls im Wärmetauscher keiner Zirkulation unterliegt, kann das Verbrauchsmedium im Aufnahmebereich des Wärmetauschers in einfacher Weise entsprechend geschichtet angeordnet werden. Wird das Verbrauchsmedium jedoch durch den entsprechenden Aufnahmebereich des Wärmetauschers transportiert, wie dies beispielsweise auch beim Solarwärmeträgermedium im Aufnahmebereich des Wärmetauschers für das Solarwärmeträgermedium, welches durch den Solarkollektor gefördert wird, der Fall ist, so kann in gleicher Weise wie beim HRB-Modul eine entsprechende Aufweitung des Strömungsquerschnitts im entsprechenden Aufnahmebereich des Wärmetauschers vorgesehen sein, so dass im Wärmetauscher in den entsprechenden Aufnahmebereichen die Fließgeschwindigkeit stark absinkt, so dass sich eine temperaturabhängige Schichtstruktur einstellen kann.

Da das Heizsystem modulartig aus verschiedenen Modulen, wie einem oder mehreren Wärmetauschern, einem oder mehreren Speichern sowie einem Heizungsrücklaufanhebungs- und Beruhigungsmodul, aufgebaut sein kann, können diese Module zumindest teilweise miteinander verbunden sein, so dass sich eine automatische, selbstständige Schichtung des Wärmeträgermediums und/oder Verbrauchsmediums gemäß der temperaturabhängigen Dichte zumindest teilweise über die Module hinweg ergibt. So können beispielsweise der Wärmetauscher und ein Wärmespeicher miteinander verbunden sein, so dass aufgewärmtes Verbrauchsmedium sich im Speicher sammeln und dort eine entsprechende Schichtstruktur ausbilden kann. Der Austausch zwischen den Modulen kann hier ausschließlich aufgrund der Schwerkraft erfolgen, sodass auf zusätzliche Antriebe wie Pumpen oder sonstige Steuerungseinheiten, wie Ventile und dergleichen sowie aufwendige Regelungsanlagen verzichtet werden kann. Vielmehr kann sich entsprechen den physikalischen Grundsätzen automatisch eine temperaturabhängige Schichtstruktur ausbilden.

Eine Schichtung der Wärmeträger kann zusätzlich dadurch gefördert werden, dass die Verbindungsleitung zwischen den einzelnen Modulen, wie Wärmetauschern, Speichern und/oder dem Heizungsrücklaufanhebungs- und Beruhigungsmodul mit einem großen Leitungsquerschnitt gebildet werden, sodass die Strömungsgeschwindigkeit insgesamt sehr niedrig ist. Beispielsweise kann der Strömungsquerschnitt ca. vier bis fünfmal so groß sein verglichen mit Heizungssystemen des Standes der Technik.

Die verschiedenen Verbindungen zwischen den einzelnen Modulen, also den Wärmetauschern, Speichern, und/oder dem Heizungsrücklaufanhebungs- und Beruhigungsmodul sind üblicherweise als Zirkulationsverbindungen ausgebildet, also mit mindestens zwei Leitungen, die einen Transport des Wärmeträgermediums sowohl in die eine Richtung als auch in die andere Richtung ermöglichen, und zwar getrennt voneinander. Dadurch kann sich ein dreidimensionales Schichtungssystem über das gesamte Heizsystem und die verschiedenen Module, wie Wärmetauscher, Speicher und HRD-Modul einstellen.

Dadurch wird bei den Speichern des Heizsystems auch erreicht, dass bei einer Entnahme des Wärmeträgermediums aus dem Speicher nicht nur ein Zufluss vorliegt, sondern die zweite Leitung der Zirkulationsverbindung bei Bedarf ebenfalls automatisch als Zufluss fungiert, sodass wiederum die Einströmungsgeschwindigkeit sehr stark verlangsamt werden kann und die Schichtstruktur erhalten bleibt. Dadurch kann der Wirkungsgrad deutlich erhöht werden, da eine Zerstörung der Schichtung einen hohen Verlust an nutzbarer Wärme mit sich bringen würde.

Folglich können die Speicher des Heizsystems dahingehend optimiert sein, dass sie eine Vermischung und Verwirbelung vermeiden und lediglich eine Durchströmung mit möglichst niedriger Geschwindigkeit in einer Richtung erlauben. Dieser Aspekt der vorliegenden Erfindung soll entsprechend, wie unten weiter ausgeführt werden wird, ebenfalls separat und unabhängig sowie in Kombination mit den anderen Aspekten der Erfindung unter Schutz gestellt werden.

Die Vermeidung von Vermischungen im Speicher kann auch dadurch unterstützt werden, dass die Speicherwand entsprechend ausgestaltet und isoliert wird, um Konvektion zu vermeiden, oder dass auf Einbauten im Speicher verzichtet wird, an denen das Wärmeträgermedium abgelenkt werden kann. Ferner kann dies erreicht werden, wenn der Zufluss zum Speicher am Boden angeordnet ist und die Entnahmestelle für das Wärmeträgermedium aus dem Speicher im Bereich der Oberseite des Speichers vorgesehen ist.

Weiterhin wird nach einem zweiten Aspekt der vorliegenden Erfindung für den unabhängig und in Kombination mit den anderen Aspekten der vorliegenden Erfindung Schutz begehrt wird, ein Heizsystem vorgeschlagen, bei dem mindestens ein Wärmetauscher vorhanden ist, der einen ersten Aufnahmebereich für ein erstes Medium und einen zweiten Aufnahmebereich für ein zweites Medium aufweist, wobei das erste Medium von einer Wärmequelle, wie beispielsweise einem Solarkollektor erwärmt werden kann, und die Wärme von dem ersten Medium im Wärmetauscher an das zweite Medium übertragen wird, welches die Energie in einem Speicher speichert und/oder an Verbraucher abgibt. Der erfindungsgemäße Wärmetauscher weist einen ersten Aufnahmebereich für das erste Medium und/oder einen zweiten Aufnahmebereich für das zweite Medium auf, welche in ihrem Strömungsquerschnitt gegenüber dem Strömungsquerschnitt der jeweiligen Zuflüsse so stark vergrößert sind, dass die Durchlaufgeschwindigkeit im ersten und/oder zweiten Aufnahmebereich sehr viel kleiner als in den jeweiligen Zuflüssen ist, sodass sich eine Schichtung des ersten und/oder zweiten Mediums im jeweiligen Aufnahmebereich gemäß der temperaturbedingten Dichte einstellt.

Darüber hinaus wird nach einem weiteren Aspekt der vorliegenden Erfindung für den selbstständig und in Kombination mit den anderen Aspekten der vorliegenden Erfindung Schutz begehrt wird, ein Heizsystem vorgeschlagen, welches einen Heizkreislauf aufweist, durch den ein Heizmedium geführt wird, welches an Heizelemente Wärmeenergie abgibt. Ein derartiges Heizsystem weist ein Heizungsrücklaufanhebungs- und Beruhigungsmodul (HRB-Modul) auf, welches wiederum eine Schichtung des Heizmediums gemäß der temperaturbedingten Dichte ermöglicht und alleine aufgrund der Schwerkraft ein Einfließen des Heizmediums mit hoher Temperatur von einer Wärmequelle ermöglicht.

Bei den erfindungsgemäßen Heizsystemen können insbesondere mehrere Wärmetauschermodule vorgesehen sein, die seriell und/oder parallel zu einander geschaltet sind. Beispielsweise kann ein erstes Wärmetauschermodul für einen Heizkreislauf vorgesehen sein und ein zweites Wärmetauschermodul für die Erwärmung von Warmwasser eingesetzt werden. Neben einer parallelen Schaltung, in der beide Wärmetauschermodule nebeneinander betrieben werden und jeweils einen Teil des Wärmeträgermediums, welches durch die Wärmequelle, wie beispielsweise einen Sonnenkollektor, erwärmt wird, nutzen, können die Wärmetauschermodule auch seriell hintereinander geschaltet sein, sodass das erwärmte Verbrauchsmedium des einen Wärmetauschers als Wärmeträgermedium für den anderen Wärmetauscher fungiert.

Das Heizsystem kann eine Zirkulationsleitung für ein Verbrauchsmedium umfassen, beispielsweise für warmes Brauchwasser, sodass an Verbrauchsstellen, die weiter entfernt von einem Speicher des Heizsystems sind unmittelbar und kurzfristig ein entsprechendes Verbrauchsmedium bereitgestellt werden kann. In derartigen Zirkulationsleitungen wird das Verbrauchsmedium zwangsweise in geringen Mengen zirkuliert, sodass an den Verbrauchsstellen das Verbrauchsmedium, also beispielsweise warmes Wasser, zur Verfügung steht. Nach dem Stand der Technik werden solche Zirkulationsleitungen üblicherweise so ausgeführt, dass die Zirkulationsleitung in den Speicher zurückgeführt wird. Dies kann bei dem hier beschriebenen Heizsystem vermieden werden, da die Zirkulationsleitung in einen separaten Wärmetauscher zurückgeführt werden kann, sodass eine Zerstörung der Schichtstruktur durch Einleitung des Verbrauchsmediums über die Zirkulationsleitung vermieden wird.

Nach einem weiteren Aspekt der vorliegenden Erfindung, für den selbstständig und in Kombination mit anderen Aspekten Schutz begehrt wird, wird ein Wärmetauscher vorgeschlagen, der einen ersten Aufnahmebereich für ein erstes Medium und einen zweiten Aufnahmebereich für ein zweites Medium aufweist, wobei erster Aufnahmebereich und/oder zweiter Aufnahmebereich in ihrem Strömungsquerschnitt gegenüber dem Strömungsquerschnitt der jeweiligen Zuflüsse so stark vergrößert sind, dass die Durchlaufgeschwindigkeit der Medien im ersten und/oder zweiten Aufnahmebereich sehr viel kleiner ist als in den jeweiligen Zuflüssen und zwar so, dass sich eine Schichtung des ersten und/oder zweiten Mediums im jeweiligen Aufnahmebereich gemäß der temperaturbedingten Dichte einstellt. Gemäß einem weiteren Aspekt der vorliegenden Erfindung, für den selbstständig und in Kombination mit anderen Aspekten Schutz begehrt wird, ist der Wärmetauscher als ein Abwasserwärmerückgewinnungssystem ausgebildet, bei welchem die Wärme durch Abwasser bereitgestellt wird und an ein beliebiges Medium zur Wärmeaufnahme, insbesondere ein Medium eines Solarheizsystems übertragen wird.

Ein derartiger Wärmetauscher kann beispielsweise aus quaderförmigen bzw. plattenartigen Kammern gebildet sein, die insbesondere abwechselnd in Bezug auf ihre Zugehörigkeit zu den Aufnahmebereichen für Wärmeträgermedium und Verbrauchsmedium aufeinander gestapelt und vorzugsweise gegenüber der Horizontalen geneigt angeordnet sein können, um die Einstellung einer temperaturbedingten Schichtung zu erleichtern.

Hierbei können die Aufnahmebereiche für warme Wärmeträgermedien, wie z.B. das Solarträgermedium, welches durch ein Solarmodul aufgeheizt wird, in dem Wärmetauscher in den unteren Bereichen angeordnet sein und die Aufnahmebereiche für das Verbrauchsmedium darüber, sodass sich das Verbrauchsmedium wie auf einer Heizplatte befindet und sich im Verbrauchsmedium keine Kaltstellen ausbilden können, die beispielsweise bei der Warmwasserbereitung zur Ausbildung von Legionellen führen könnten.

Darüber hinaus umfasst die vorliegende Erfindung nach einem weiteren Aspekt, für den unabhängig und selbstständig sowie in Kombination mit den anderen Aspekten der vorliegenden Erfindung Schutz begehrt wird, einen Wärmespeicher, der einen wärmeisolierten Behälter aufweist und einen Zufluss im Bereich der Behälterunterseite und einen Abfluss im Bereich der Behälteroberseite für ein Wärmeträgermedium aufweist, wobei der Abfluss als Wärmesiphon ausgeführt ist, welcher in einem Bogen aus dem Behälterinnenraum der Schwerkraft folgend nach unten geführt ist und mindestens einen Abschnitt mit einem vertikalen Richtungsanteil aufweist, sodass ein Rückfluss aus dem Abfluss in den Behälterinnenraum nur durch einen der Schwerkraft entgegen gerichteten Anstieg des Wärmeträgermediums möglich wäre. Mit einem derartigen Wärmesiphon wird somit gewährleistet, dass keine Wärmeverluste durch Rückfluss von abgekühltem Wärmeträgermedium auftreten können.

Insbesondere kann der Abfluss einen vertikal verlaufenden Leitungsabschnitt aufweisen, sodass ein Rückfluss von kühlerem Wärmeträgermedium entgegen der temperaturbedingten Dichte und der daraus resultierenden Schwerkraft nicht möglich ist.

Um zusätzlich zu vermeiden, dass in der Abflussleitung eine Abkühlung des Wärmeträgermediums stattfindet, kann diese in der Isolierung des Behälters des Speichers eingebaut sein.

Nach einem weiteren Aspekt der vorliegenden Erfindung für den unabhängig und selbstständig sowie in Kombination mit den anderen Aspekten der vorliegenden Erfindung Schutz begehrt wird, wird ein Wärmespeicher für ein Wärmeträgermedium vorgeschlagen, der einen Behälter umfasst, der keinerlei Einbauten aufweist, um zu vermeiden, dass durch die Einbauten die Durchströmung behindert wird und es zu Verwirbelungen kommt, was zu einer Zerstörung einer durch die temperaturbedingte Dichte erzeugte Schichtung des Wärmeträgermediums im Wärmespeicher führen kann. Dadurch kann die Effektivität des Wärmespeichers stark erhöht werden, insbesondere im Zusammenhang mit Solarmodulen zur Erzeugung von Wärme, die ansonsten unter Umständen zu bestimmten Zeiten keine ausreichend hohe Temperatur des Wärmeträgermediums ermöglichen.

Darüber hinaus kann der Speicher so aufgebaut sein, dass der oder die Zuflüsse ausschließlich im Bereich des Bodens des Speichers angeordnet sind, während der oder die Abflüsse an der Oberseite des Speichers ausgebildet sind, sodass sich eine Durchströmung des Speichers mit sehr langsamer Strömungsgeschwindigkeit in einer einzigen Richtung ergibt. Unabhängig davon kann lediglich eine Schwerkraftzirkulation des Wärmeträgermediums mit anderen Modulen stattfinden, sodass zum Beispiel aus dem Bodenbereich des Speichers ein abgekühltes Wärmeträgermedium oder ein gegenüber einströmendem Wärmeträgermedium im Vergleich kälteres Wärmeträgermedium in ein entsprechendes Wärmetauschermodul absinkt.

Gemäß weiteren Aspekten der vorliegenden Erfindung, für die jeweils unabhängig und in Kombination mit anderen Aspekten der vorliegenden Erfindung Schutz begehrt wird, zeichnet sich die vorliegende Erfindung durch ein Verfahren zur Übertragung und/oder Speicherung von Wärme dadurch aus, dass sich bei einem strömenden Wärmeträgermedium, welches sich beispielsweise von einer Wärmeaufnahmestelle zu einer Wärmeabgabestelle oder umgekehrt bewegt, durch Bereitstellung eines zweiten, sehr viel größeren Strömungsquerschnitts als dem Strömungsquerschnitt in der Transportleitung eine Absenkung der Strömungsgeschwindigkeit ergibt, was die Ausbildung einer temperaturbedingten Schichtung des Wärmeträgermediums ermöglicht. Ferner ist ein Verfahren zur Übertragung und/oder Speicherung von Wärme dadurch gekennzeichnet, dass bei einem Wärmeübertragungsbereich, bei dem Wärme von einem ersten Wärmeträger auf einen zweiten Wärmeträger übertragen wird, sowie in einem Speicher oder Wärmeträgerübernahmebereich das Wärmeträgermedium entsprechend der temperaturabhängigen Dichte geschichtet wird. Der Wärmeträgerübernahmebereich kann beispielsweise durch ein HRB-Modul bereitgestellt werden.

Nach einem weiteren Aspekt der vorliegenden Erfindung für den selbstständig und unabhängig sowie in Kombination mit anderen Aspekten der vorliegenden Erfindung Schutz begehrt wird, wird ein Verfahren zum Betrieb eines Heizsystems bereitgestellt, bei dem ein Wärmeträgerspeicher zur Aufnahme eines Wärmeträgermediums verwendet werden, wobei die Temperaturerhöhung des Wärmeträgermediums lediglich dadurch erfolgt, dass ein Wärmeträgermedium mit höheren Temperaturen beigemischt wird und/oder einzirkuliert, und zwar gemäß der Schwerkraftzirkulation wie vorher dargestellt.

Darüber hinaus betrifft die vorliegende Erfindung nach einem Aspekt, für den ebenfalls selbstständig und unabhängig sowie in Kombination mit anderen Aspekten Schutz begehrt wird, ein Verfahren zum Betrieb eines Heizsystems bei dem mittels Sonnenenergie ein Wärmeträgermedium aufgeheizt wird, welches die Energie auf ein Verbrauchsmedium, wie beispielsweise Heizwasser oder Warmwasser überträgt, wobei die Temperatur des Wärmeträgermediums unter 25°C, insbesondere unter 20°C liegen kann. Durch die oben beschriebene Ausgestaltung der erfindungsgemäßen Heizsysteme wird nämlich erreicht, dass ein Wärmeträgermedium mit niedriger Temperatur einen Beitrag leisten kann, was insbesondere für Solarsysteme vorteilhaft ist, da das durch Sonnenenergie erwärmte Wärmeträgermedium insbesondere in der kalten Jahreszeit häufig nicht die erforderliche Grenztemperatur von Solaranlagen des Standes der Technik erreicht.

### KURZBESCHREIBUNG DER FIGUREN

Die beigefügten Figuren zeigen in rein schematischer Weise in
- Fig. 1: eine Übersicht über ein erfindungsgemäßes Heizsystem nach einer ersten Ausführungsform;
- Fig. 2: eine Übersicht über ein erfindungsgemäßes Heizsystem nach einer zweiten Ausführungsform;
- Fig. 3: eine Übersicht über ein erfindungsgemäßes Heizsystem nach einer dritten Ausführungsform;
- Fig. 4: eine Übersicht über ein erfindungsgemäßes Heizsystem nach einer vierten Ausführungsform;
- Fig. 5: eine andere Darstellung des Heizsystem aus Figur 4;
- Fig. 6: bis 8 Darstellungen des Ausführungsbeispiels gemäß Figur 5, wobei einzelne Komponenten weggelassen sind;
- Fig. 9: eine Darstellung eines Abwasserwärmerückgewinnungssystems; und in
- Fig. 10: eine Darstellung des Abwasserwärmerückgewinnungssystem aus Fig. 9 in einem Heizsystem.

### AUSFÜHRUNGSBEISPIELE

Weitere Vorteile, Kennzeichen und Merkmale der vorliegenden Erfindung werden bei der nachfolgenden detaillierten Beschreibung von Ausführungsbeispielen deutlich. Allerdings ist die Erfindung nicht auf diese Ausführungsbeispiele beschränkt.

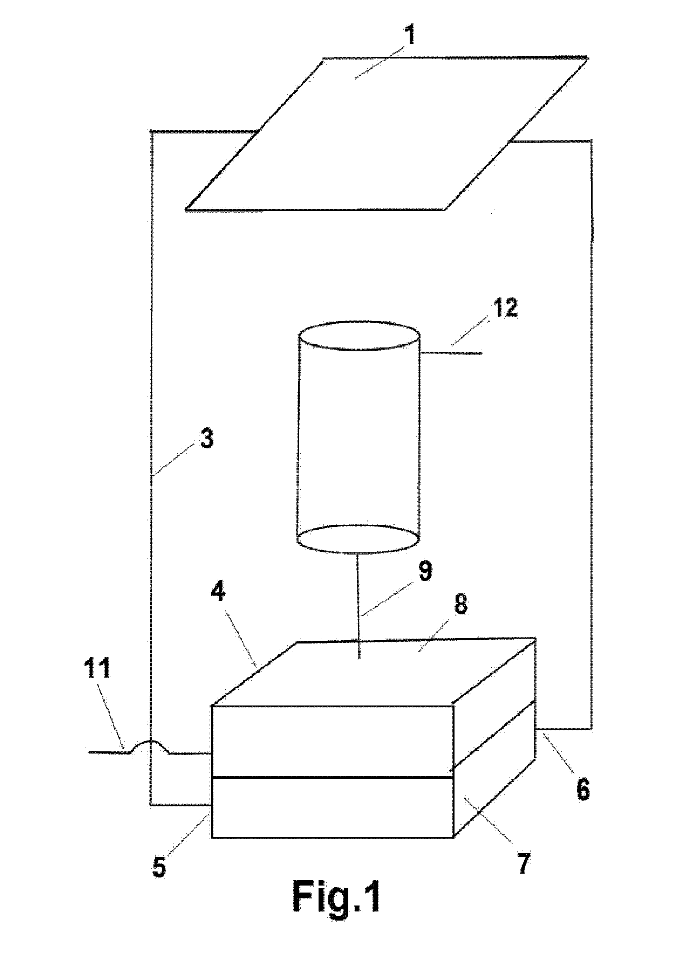

Die Figur 1 zeigt eine erste Ausführungsform eines erfindungsgemäßen Heizsystems mit einem Sonnenkollektor 1 und einem Solarwärmeübertragungsmodul 4, die über eine Zuführleitung 2 und eine Rückleitung 3 miteinander verbunden sind, sodass ein Solarwärmeträger, z.B. ein Fluid, wie Wasser oder ein frostsicheres Öl oder ein Flüssigkeitsgemisch oder dergleichen zwischen dem Solarwärmeübertragungsmodul 4 und dem Solarkollektor 1 fließen kann.

Der Solarwärmeträger fließt hierbei durch den Kollektor 1 und nimmt dabei Sonnenenergie auf und fließt von dem Kollektor 1 über die Rückleitung 3 in das Solarwärmeübertragungsmodul 4. Die Einleitung des Solarwärmeträgers in das Solarwärmeübertragungsmodul 4 erfolgt beim Einlauf 5. Nach Eintritt in das Solarwärmeübertragungsmodul 4 fließt der Solarwärmeträger in einem ersten Aufnahmebereich 7 des Solarwärmeübertragungsmoduls durch das Solarwärmeübertragungsmodul 4 und gibt dort durch Wärmetausch Wärme an ein Verbrauchsmedium ab, welches in einem getrennten, zweiten Aufnahmebereich 8 des Solarwärmeübertragungsmoduls 4 angeordnet ist. Das Verbrauchsmedium ist wiederum ein Fluid, wie z.B. Wasser. Nach Abgabe der Wärme an das Verbrauchsmedium verlässt der Solarwärmeträger das Solarwärmeübertragungsmodul 4 über den Auslass 6 in die Zuführleitung 2, die den Solarwärmeträger wieder zum Solarkollektor 1 zurück führt, sodass der Solarwärmeträger dort erneut Wärme aufnehmen kann. Die Führung des Solarwärmeträgers im Kreis durch den Sonnenkollektor 1 und das Solarwärmeübertragungsmodul 4 kann kontinuierlich oder intermittierend in individuell einstellbaren oder bedarfsabhängigen Zeitabständen erfolgen.

Der erste Aufnahmebereich 7 für den Solarwärmeträger im Solarwärmeübertragungsmodul 4 ist so ausgestaltet, dass sowohl bei einer ständigen Zirkulation des Solarwärmeträgers durch den Sonnenkollektor 1 und somit durch den Kreislauf aus Sonnenkollektor 1 und Solarwärmeübertragungsmodul 4 sowie Zuführleitung 2 und Rückleitung 3 als auch bei einem intermittierenden Betrieb, bei dem der Solarwärmeträger beispielsweise nur bei entsprechendem Bedarf zirkuliert wird, der Solarwärmeträger im ersten Aufnahmebereich 7 des Solarwärmeübertragungsmoduls 4 eine geringe Fließgeschwindigkeit aufweist. Dies wird dadurch erreicht, dass beispielsweise der erste Aufnahmebereich 7 für den Solarwärmeträger im Solarwärmeübertragungsmodul 4 einen sehr groß dimensionierten Querschnitt gegenüber dem Querschnitt der Rückleitung 3 aufweist, sodass die Fließgeschwindigkeit stark abnimmt. Durch die niedrige Fließgeschwindigkeit ergibt sich eine gute Wärmeübertragung auf das Verbrauchsmedium.

Darüber hinaus ermöglicht die niedrige Fließgeschwindigkeit zusammen mit einer geeigneten Gestaltung des ersten Aufnahmebereichs 7 eine Schichtung des Solarwärmeträgers im ersten Aufnahmebereich 7, sodass der Solarwärmeträger mit hoher Temperatur in oberen Schichten angeordnet ist, während auf Grund der höheren Dichte des Solarwärmeträgers mit niedriger Temperatur sich dieser in tieferen Schichten anordnet. Dies verbessert die Wärmeübertragung auf das Verbrauchsmedium.

Allerdings kann der erste Aufnahmebereich 7 für den Solarwärmeträger auch andersartig gestaltet sein, nämlich als schlangenförmige oder gewundene Leitung, die im Wesentlichen denselben Querschnitt wie die Zuführ- oder Rückleitungen 2,3 aufweist, aber aufgrund ihrer langen Wegstrecke benachbart zu einem zweiten Aufnahmebereich 8 für das Verbrauchsmedium ebenfalls eine Wärmeübertragung ermöglicht.

Der zweite Aufnahmebereich 8 für das Verbrauchsmedium des Solarwärmeübertragungsmoduls 4 ist erfindungsgemäß so gestaltet, dass sich eine Schichtung des Verbrauchsmediums gemäß seiner Dichte einstellt, das heißt, dass das Verbrauchsmedium mit hoher Temperatur in oberen Schichten angeordnet ist und das Verbrauchsmedium mit niedriger Temperatur in unteren Schichten. Dazu ist der zweite Aufnahmebereich 8 des Verbrauchsmediums im Solarwärmeübertragungsmodul 4 so gestaltet, dass das Verbrauchsmedium mit niedriger Temperatur bei Erwärmung ungehindert aufsteigen kann, sodass die Schichtstruktur des Verbrauchsmediums im zweiten Aufnahmebereich 8 auf das Solarwärmeübertragungsmoduls 4 jederzeit eingestellt werden kann.

Der zweite Aufnahmebereich 8 des Solarwärmeübertragungsmoduls 4 für das Verbrauchsmedium ist über eine Verbindungsleitung 9 mit einem Speicher 10 verbunden, der ebenfalls so aufgebaut ist, dass das Verbrauchsmedium sich in einer Schichtstruktur anordnet, wobei in den obersten Schichten das Verbrauchsmedium mit geringer Dichte und somit hoher Temperatur angeordnet ist, während in den Schichten darunter die Dichte umso mehr zunimmt, je weiter unten das Verbrauchsmedium angeordnet ist. Entsprechend ist in dem Speicher 10 oben das Verbrauchsmedium mit der höchsten Temperatur angeordnet, während in den Schichten darunter die Temperatur des Verbrauchsmediums immer mehr abnimmt.

Das Verbrauchsmedium kann beispielsweise Wasser sein, das als Warmwasser in einem Haushalt Verwendung findet. Der Speicher ist dann ein Warmwasserspeicher aus dem das Warmwasser über die Entnahmeleitung 12 bei Bedarf entnommen werden kann und zwar aus einer oberen Schicht, in der das Warmwasser mit der höchsten Temperatur vorliegt. Entsprechend wird Frischwasser über die Zuleitung 11 dem Solarwärmeübertragungsmodul 4 im zweiten Aufnahmebereich 8 zugeführt.

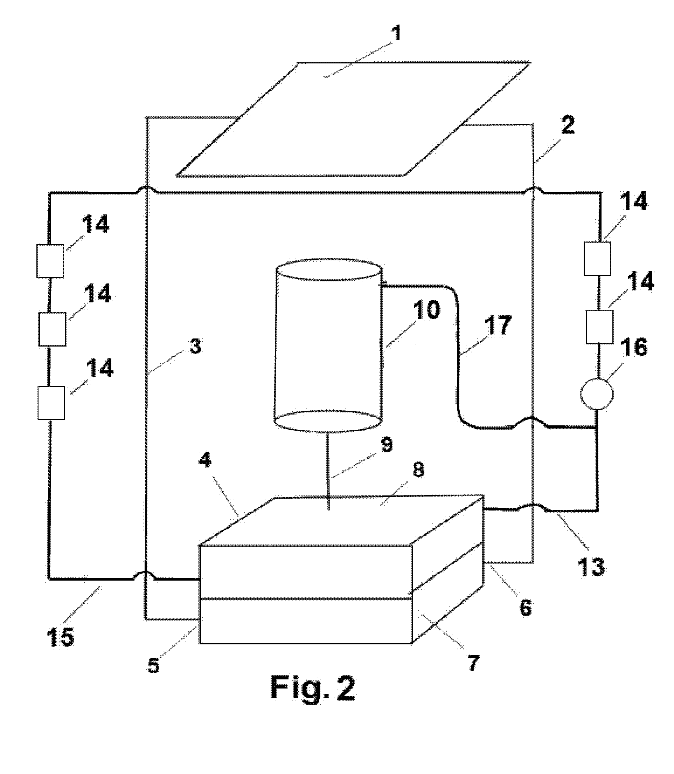

Die Fig. 2 zeigt eine weitere Ausführungsform eines erfindungsgemäßen Heizsystems, wobei die Anordnung aus dem Solarkollektor 1, der Zuführleitung 2, der Rückleitung 3, dem Solarwärmeübertragungsmodul 4 und dem Speicher 10 identisch zu der Ausführungsform der Fig. 1 ist, sodass sich eine weitere Beschreibung dieser Komponenten erübrigt. Der Unterschied besteht nunmehr darin, dass auch das Verbrauchsmedium in einem Kreislauf geführt wird, wobei der zweite Aufnahmebereich 8 des Solarwärmeübertragungsmoduls 4 für das Verbrauchsmedium Teil dieses Kreislaufs ist. Entsprechend ist in der Fig. 2 eine Abgabeleitung 13 vorgesehen, über die das Verbrauchsmedium, welches im Solarwärmeübertragungsmodul 4 aufgeheizt worden ist, aus dem Solarwärmeübertragungsmodul 4 abgegeben und Verbrauchern 14 zugeführt wird, während über die Rückleitung 15 das abgekühlte Verbrauchsmedium wieder dem Solarwärmeübertragungsmodul 4 zugeführt wird. Beispielsweise kann der Kreislauf ein Heizkreislauf sein, wobei in dem Heizkreislauf entsprechende Heizflächen als Verbraucher 14 vorgesehen sein können, bei denen das Verbrauchsmedium seine im Solarwärmeübertragungsmodul 4 aufgenommene Wärme abgibt.

Der Heizkreislauf kann darüber hinaus weitere Wärmeerzeugungsmittel, wie beispielsweise Gasbrenner, Ölbrenner oder dergleichen aufweisen, mit denen das Verbrauchsmedium auf eine bestimmte Temperatur aufgeheizt werden kann. Beispielsweise kann das Solarwärmeübertragungsmodul 4 einem Heizkessel 16, wie beispielsweise einem Gasbrenner, vorgeschaltet sein, sodass das Verbrauchsmedium, also das Heizungswasser bereits vorgewärmt in den Gasbrenner gelangt, sodass die vom Gasbrenner erzeugte Energie reduziert oder auf sie ganz verzichtet werden kann.

Der zweite Aufnahmebereich 8 für das Verbrauchsmedium im Solarwärmeübertragungsmodul 4 ist hierbei so gestaltet, dass das Verbrauchsmedium wiederum in einer geschichteten Struktur vorliegt, also in einem oberen Bereich mit hoher Temperatur und in einem unteren Bereich mit einer niedrigen Temperatur. Damit sich diese Schichtung im zweiten Aufnahmebereich 8 für das Verbrauchsmedium im Solarwärmeübertragungsmodul 4 einstellen kann, ist wiederum der Strömungsquerschnitt des Aufnahmebereichs 8 des Solarwärmeübertragungsmoduls 4 sehr viel größer als der Strömungsquerschnitt der Rückleitung 15, mit der das kalte Verbrauchsmedium, also beispielsweise das abgekühlte Heizwasser, in den zweiten Aufnahmebereich 8 des Solarwärmeübertragungsmoduls 4 für das Verbrauchsmedium eingeführt wird. Außerdem kann der zweite Aufnahmebereich 8 bereits schichtweise bzw. laminar unterteilt sein, um die Ausbildung einer Temperaturschichtung zu erleichtern, wobei zwischen den einzelnen Schichtstrukturen Möglichkeiten für den gegenseitigen Austausch des Verbrauchsmediums vorgesehen sind, insbesondere die Möglichkeit vorgesehen ist, dass sich das Verbrauchsmedium in einer entsprechenden Schichtstruktur gemäß seiner Dichte einstellt. Hierzu kann der Aufnahmebereich 8 für das Verbrauchsmedium des Solarwärmeübertragungsmoduls 4 mit verschiedenen quaderförmigen bzw. plattenartigen Kammern versehen sein, die miteinander in Verbindung stehen, wobei die quader- bzw. plattenförmigen Kammern schräg angeordnet sein können, so dass sich durch die Schwerkraft das Verbrauchsmedium gemäß der Dichte geschichtet anordnet.

Um die unterschiedliche Bereitstellung von Energie durch die Sonne ausgleichen zu können, kann auch bei dieser Ausführungsform ein entsprechender Speicher 10 vorgesehen sein, der mit dem Solarwärmeübertragungsmodul 4 über die Leitung 9 in Verbindung steht, so dass warmes Verbrauchsmedium, welches bei einer bestimmten Heizleistung nicht verbraucht wird, im Speicher 10 zwischengespeichert werden kann.

Das gespeicherte Verbrauchsmedium kann über die Leitung 17 bei Bedarf in den Heizkreislauf 13,15 eingespeist werden, wobei das warme Verbrauchsmedium aus dem oberen Bereich des Speichers 10 mit dem wärmsten Verbrauchsmedium entnommen wird.

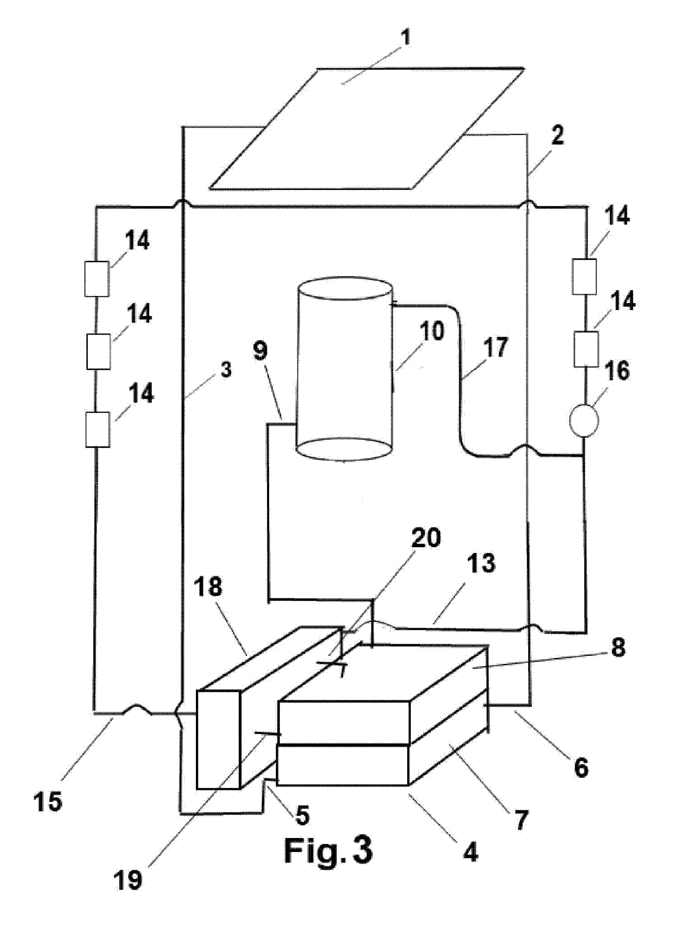

Die Fig. 3 zeigt ein weiteres Ausführungsbeispiel eines erfindungsgemäßen Heizsystems, wobei das in Fig. 3 gezeigte Beispiel des Heizsystems dem Beispiel aus Fig. 2 gleicht, lediglich mit der Ausnahme, dass ein zusätzliches Heizungsrücklaufanhebungs- und Beruhigungsmodul 18 vorgesehen ist. Die übrigen Komponenten sind identisch mit den vorangegangenen Ausführungsformen und bedürfen somit keiner weiteren Erläuterung. Das Heizungsrücklaufanhebungs- und Beruhigungsmodul (HRB-Modul) dient dazu, in einfacherer Weise im Solarwärmeübertragungsmodul 4 im zweiten Aufnahmebereich 8 für das Verbrauchsmedium die gewünschte Schichtstruktur einstellen zu können, da der Durchfluss des Verbrauchsmediums in das HRB-Modul 18 verlegt wird und im Solarwärmeübertragungsmodul 4 kein Durchfluss des Verbrauchsmediums mehr stattfindet. Der Heizkreislauf mit Heizwasserabgabeleitung 13 und Heizungsrücklauf 15 findet dann lediglich durch das HRB-Modul 13 statt und dieses steht über die Leitungen 19 und 20 in Verbindung mit dem Solarwärmeübertragungsmodul 4, so dass kühles Heizwasser (Verbrauchsmedium) in den zweiten Aufnahmebereich 8 des Solarwärmeübertragungsmoduls 4 und warmes Heizwasser (Verbrauchsmedium) vom zweiten Aufnahmebereich 8 des Solarwärmeübertragungsmoduls 4 zum HRB-Modul 18 geführt werden kann.

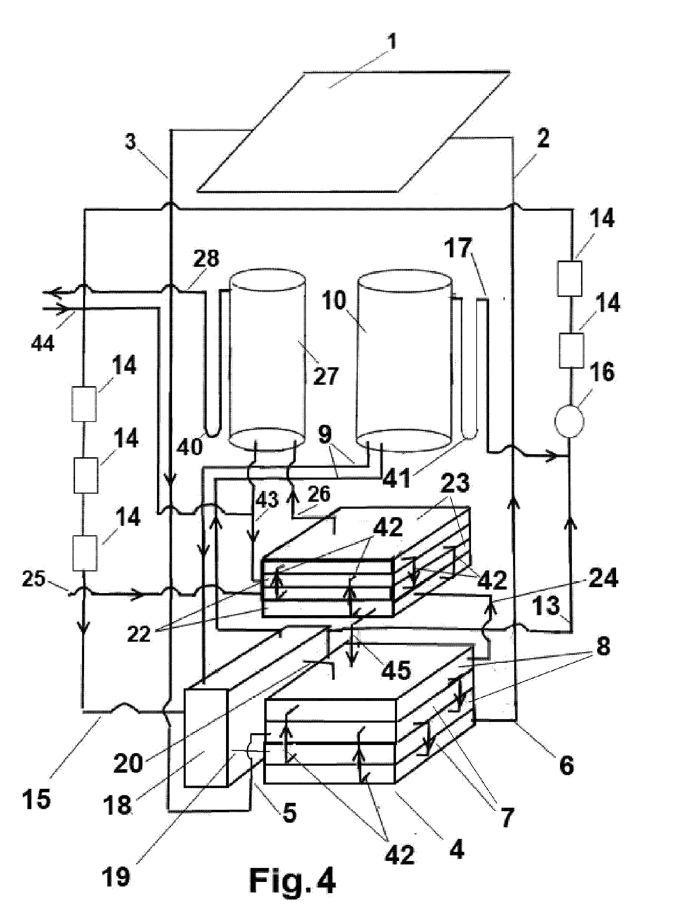

Die Fig. 4 zeigt eine weitere Ausführungsform eines erfindungsgemäßen Heizsystems, bei welchem zwei Arten von Verbrauchsmedien eingesetzt werden, nämlich einerseits z. B. Heizungswasser zum Betrieb einer Warmwasserheizung gemäß der Ausführungsform der Figuren 2 und 3 und zusätzlich die Verwendung eines Warmwassermoduls zur Erzeugung von Warmwasser, wie in der Ausführungsform der Fig. 1. Entsprechend sind bei der Ausführungsform der Fig. 4 ein zusätzliches Brauchwassermodul 21 und ein zusätzlicher Speicher 27 vorgesehen, wobei das Brauchwassermodul 21 wiederum als Wärmetauscher ausgeführt ist, und zwar mit einem ersten Aufnahmebereich 22 für ein erstes Medium und einem zweiten Aufnahmebereich 23 für ein zweites Medium. Die Aufnahmebereiche 22 und 23 sind jeweils durch zwei separate Kammern gebildet, die über jeweils zwei Verbindungsleitungen 42 miteinander verbunden sind. Bei dem gezeigten Ausführungsbeispiel ist das erste Medium das erwärmte Verbrauchsmedium aus dem Solarwärmeübertragungsmodul 4, also beispielsweise das Heizungswasser. Das zweite Medium im Brauchwassermodul 21, welches durch das Verbrauchsmedium, also das erste Medium, aufgeheizt und erwärmt wird, ist beispielsweise Warmwasser, welches zur Warmwasserversorgung eines Hauses Verwendung findet. Dieses kann wiederum in dem Speicher 27 gespeichert werden, wie diese für die Ausführungsform der Fig. 1 bereits erläutert worden ist. Entsprechend weist das Brauchwassermodul 21 einen Kaltwasserzulauf 25 auf, während das Warmwasser aus dem Speicher 27 über den Warmwasserauslass 28 entnommen wird. Der Warmwasserauslass 28 ist als Wärmesiphon 40 ausgeführt, genauso wie der Auslass 17 des Speichers 10 mit dem Wärmesiphon 41.

Das Brauchwassermodul 21 ist wiederum so aufgebaut, dass sich sowohl im ersten Aufnahmebereich 22 für das erste Medium als auch im zweiten Aufnahmebereich 23 für das zweite Medium eine geschichtete Struktur ausbildet, wobei also die ersten und zweiten Medien mit geringer Dichte in oberen Schichten angeordnet sind, während die ersten und zweiten Medien mit hoher Dichte in unteren Schichten angeordnet sind, so dass sich die ersten und zweiten Medien mit hoher Temperatur in den oberen Schichten anordnen und die ersten und zweiten Medien mit niedriger Temperatur in den unteren Schichten. Dies wird wiederum durch die Schwerkraft bewirkt, so dass die Aufnahmebereiche 22 und 23 für die ersten und zweiten Medien im Brauchwassermodul entsprechend so gestaltet sind, dass eine Schichtausbildung durch Schwerkraft möglich ist. Beispielsweise erfolgt dies wiederum durch entsprechend geneigt angeordnete quaderförmige bzw. plattenartige Kammern, die jeweils für einen Aufnahmebereich unter sich miteinander in Verbindung stehen und im Übrigen abwechselnd übereinander angeordnet sind, so dass ein Wärmeaustausch für die entsprechenden Medien möglich ist. Durch die Anordnung des Warmwassers (Brauchwassers) in dem zweiten Aufnahmebereich 23 oberhalb des Aufnahmebereichs 22 für das Heizungswasser, können sich im Aufnahmebereich 23 des Warmwassers keine kalten Bereiche ausbilden, so dass einer Legionellenbildung entgegen gewirkt wird. Dies gilt auch für den Speicher 27, bei dem durch die Zufuhr des warmen Wassers von unten und die Entnahme des warmen Wassers aus dem oberen Bereich sowie dem Verzicht auf eine Wärmeübertragungsfunktion im Speicher 27 ebenfalls die Ausbildung von kalten Bereichen vermieden wird.

Mit dem Brauchwassermodul 21 und dem ohne jegliche Regelung und/oder mechanische Komponenten auskommenden Schichtungssystem wird eine auf rein physikalischer Basis betriebene, solare Warmwasserbereitung realisiert. Ermöglicht wird dies durch die konstruktive Vorschaltung des Brauchwassermodules 21 in der Kaltwasserzuleitung 25, die zum Brauchwasserspeicher 27 führt und diesen mit Frischwasser versorgt. Immer wenn warmes Wasser entnommen wird, muss das in den Speicher 27 nachströmende Kaltwasser erst durch das Brauchwassermodul 21 fließen, das mit dem im Solarwärmeübertragungsmodul 4 befindlichen Heizungswasser über die Kammernwände thermisch gekoppelt ist. Dabei ist es so konstruiert, dass wärmeres Wasser aus dem Aufnahmebereich 8 (Heizwasserkammer) des Solarwärmeübertragungsmoduls 4 in den Aufnahmebereich 22 (Heizwasserkammer) des Brauchwassermoduls 21 einzirkulieren kann. Die jeweiligen Kammerwände in den Aufnahmebereichen 22 übertragen die im Heizwasser befindliche Wärmeenergie auf die Aufnahmebereiche 23. Bei ausreichender Solarkollektortemperatur steigt die Wärme in den Speicher 27 auf. Reicht die solare Temperatur nicht aus, um das Kaltwasser so weit zu erwärmen, dass es in den Brauchwasserspeicher 27 aufsteigen kann, so verbleibt es zumindest in einem vorerwärmten Zustand im Brauchwassermodul 21, aus dem es bei Warmwasserentnahme weiter in den Speicher 27 fließt.

Durch dieses Verfahren wird erreicht, dass die Solaranlage stets das im System kälteste Medium, nämlich Kaltwasser direkt beheizt und so eine niedrige Betriebstemperatur ermöglicht.

Auch in dem Fall, dass der Speicher 27 durch den Heizkessel beladen werden muss, weil, für die Vollbeheizung, nicht ausreichender Solarertrag ansteht und sich so nicht ausreichend Temperatur im Speicher 27 befindet, bleibt die Wassertemperatur im Brauchwassermodul 21 von der Beheizung durch den Kessel 16 ausgeschlossen und unbeeinflusst.

Bei Systemen des Standes der Technik, bei denen die Beheizung mittels Heizkessel und Solaranlage in nur einem Speicherkörper realisiert werden, kann die Solaranlage erst dann nutzbaren Solarertrag einspeisen, wenn die Temperatur der Sonnenkollektoren höher ist, als die im Speicher. Um die Warmwasserversorgung jederzeit gewährleisten zu können wird der Brauchwasserspeicher durch den Heizkessel stets auf Mindesttemperatur (z.B. 50°C) gehalten. Bei der vorliegenden Erfindung wird demgegenüber das Wasservolumen in einen vorerwärmten Bereich (Brauchwassermodul 21 mit Temperaturen ab ca. 15°C) und in einen Verbrauchsbereich mit Brauchwassersspeichertemperatur 50°C gesplittet. So nutzt ein bekanntes Brauchwassersystem nach dem Stand der Technik lediglich den Temperaturbereich von 50 bis 60°C, während das System gemäß der Erfindung durch die Trennung von Speicher 27, der über Kessel und Solaranlage beheizbar ist, und Kaltwasservorerwärmung über das Brauchwassermodul 21, aus dem solarerwärmtes Wasser erst dann in den Speicher 27 aufströmt, wenn es entsprechende Temperaturen erreicht hat, einen Temperaturbereich von ca. 17 bis 60°C nutzen kann. Dies bedeutet, dass nicht nur bei wesentlich geringeren Kollektortemperaturen Solarertrag möglich wird, sondern auch, dass mehr Solarertrag durch einen besseren Kollektorwirkungsgrad und eine automatische Anpassung der Speichermasse an den Solarertrag erreicht wird. Bei nicht ausreichender Solarleistung wird nämlich nur das Volumen im Brauchwassermodul 21 und im Solarmodul 4 durch die Solaranlage erwärmt. Entsprechend kann das gezeigte Brauchwassersystem durch das wesentlich verbreiterte Temperaturnutzungsband 3,16 mal mehr Wärme aufnehmen als dies bei bisherigen Systemen der Fall ist.

Das Solarwärmeübertragungsmodul 4 ist bei dem Ausführungsbeispiel der Fig. 4 mit getrennten Teilen der jeweiligen Aufnahmebereiche 7, 8 und deren abwechselnden Stapelung sowie Verbindung untereinander über die Verbindungsleitungen 42 dargestellt.

Darüber hinaus ist zu erkennen, dass auch das HRB-Modul 18 über die Verbindungsleitungen 9 mit dem Speicher 10 kommunizieren kann, so dass sich über die entsprechenden Komponenten eine Schichtung einstellt und eine Gewichtskraftzirkulation ermöglicht wird.

In ähnlicher Weise ist der Speicher 27 über die Verbindungsleitungen 26 und 43 mit den Aufnahmebereichen 23 für das Warmwasser im Brauchwassermodul 21 verbunden.

Zur Sicherstellung einer Warmwasserversorgung bei nicht ausreichendem Solarertrag kann entweder ein zweiter Brauchwasserspeicher (nicht gezeigt) vorgesehen werden, der durch den Heizkessel 16 bei Bedarf mit Warmwasser versorgt wird, oder es kann eine Verbindungsleitung vom Heizkessel 16 zum Brauchwasserspeicher 27 vorgesehen werden, so dass vom Heizkessel erwärmtes Warmwasser in den Speicher 27 zugeführt werden kann. Alternativ erfolgt eine Erwärmung des Brauchwassers indirekt über die zusätzliche Erwärmung des Heizwassers durch den Heizkessel.

In die Rücklaufleitung 43 vom Speicher 27 in das Brauchwassermodul 21 mündet zusätzlich die Rücklaufleitung 44 einer Warmwasserzirkulation, so dass der Rücklauf der Warmwasserzirkulation nicht in den Speicher 27 geführt wird, sondern in das Brauchwassermodul 21.

Eine Warmwasserzirkulation dient der Bereitstellung von warmen Wasser zu beliebigen Zeiten an möglichst allen Stellen des Warmwasserversorgungssystems. Dazu wird eine geringe Menge an warmen Wasser umgewälzt, um eine Abkühlung des Wassers in den Leitungen zu vermeiden, die dazu führen würde, dass zunächst abgekühltes Wasser aus der Warmwasserentnahmestelle entnommen werden müsste, bis warmes Wasser nachfließt. Entsprechend dienen die Zirkulationsleitung 44 und eine Zirkulationspumpe (nicht gezeigt) dem Zweck, das Leitungswasser im Warmwasserkreis umzuwälzen, um so, wenn über längere Zeit kein Warmwasser entnommen wird, abgekühltes Wasser in der Warmwasserleitung durch warmes Wasser zu ersetzen. Dazu wird die Zirkulationsleitung 44 im Stand der Technik üblicherweise an den Brauchwasserspeicher angeschlossen, der die Rückströmung des abgekühlten Leitungswassers aufnimmt. Dies führt jedoch zu einer Vermischung und Abkühlung des Wassers im Brauchwasserspeicher und zu einem Verlust an Wärme und Effizienz des Systems.

Die vorliegende Erfindung bietet hier eine Lösung, da der Speicher 27 genauso wie der Speicher 10 im Heizungsbereich nur in eine Richtung vom Zulauf am Speicherboden hin zur Entnahme an der Speicheroberseite strömt. Eine störende Quereinströmung in den Speicher sowie das Auskühlen des Speichers werden dadurch vermieden. Entsprechend erfolgt die Rückzirkulation aus der Warmwasserleitung über die Zirkulationsleitung 44 nicht direkt in den Speicher 27, sondern darunter in die Leitung 26, wo das Rücklaufwasser aufgrund seiner Dichte in das Brauchwassermodul 21 absinken kann oder bei ausreichender Temperatur nach oben in den Speicher 27 in Richtung Entnahme aufsteigen kann.

Das Heizungssystem gemäß der Figur 4 weist insgesamt drei Medien auf, mit denen es betrieben wird und die jeweils in einem eigenen geschlossenen Kreislauf geführt werden. Bei den Medien und Kreisen handelt es sich um den Solarkreis mit beispielsweise Wasser-Glycol-Gemisch, den Heizkreis mit Heizwasser und den Brauchwasserkreis mit warmen Verbrauchswasser.

Der Wärmefluss und die Wärmeverteilung über das Solarsystem verläuft aus dem Solarkollektor in die ersten Aufnahmebereiche 7 des Solarwärmeübertragungsmoduls 4, wo die Wärme auf das Medium in den zweiten Aufnahmebereichen 8 (Heizwasserkammern) übertragen wird. Die Heizwasserkammern 8 sind über das Schwerkraftsystem mit dem Heizungsrücklaufberuhigungsmodul 18, sowie mit dem Brauchwassermodul (Kaltwasservorerwärmungsmodul) 21 verbunden. Je nach Temperatur strömt die Wärme in das Brauchwassermodul 21 in die ersten Aufnahmebereiche 22, wo die Wärme auf das Brauchwasser in den zweiten Aufnahmebereichen 23 und den Speicher 27 übertragen wird, oder zur Heizungsunterstützung über die Schichtungsleitungen 19, 20 in das Heizungsrücklaufberuhigungsmodul 18. wo die Wärme dem Heizungsrücklauf des Heizkreises beigemischt wird, bevor es in den Kessel 16 zurück fließt und von diesem wieder erwärmt wird und zur Hausbeheizung weiter in den oder die Heizkreise strömt. Bei ausreichendem Temperaturhub der Rücklauftemperatur durch das Heizungsrücklaufberuhigungsmodul 18 muss der Heizkessel 16 nicht mehr zuschalten, die Wärme wird dann nur durch den Kessel gepumpt, ohne dass der Brenner läuft. Das Heizungsrücklaufberuhigungsmodul 18 sorgt für den automatischen Angleich der Heizungsspeichermasse an den Solarertrag. So lange das Haus mehr Energie verbraucht als durch die Solaranlage erzeugt werden kann, wird durch die Wärmeabnahme im Heizungsrücklaufberuhigungsmodul 18 keine Wärme in den Pufferspeicher 10 aufsteigen können, da die Wärme direkt in den Heizkreisrücklauf beigemischt und von den Verbrauchern in den Heizkreisen, wie Heizkörpern usw., direkt verbraucht wird. Erst wenn der Solarertrag den Wärmebedarf des Hauses übersteigt, kann die Temperatur in den Modulen ansteigen und in den Speicher 10 einzirkulieren, von wo aus es über die Heizungspumpe entnommen werden kann.

Die solare Brauchwassererwärmung im Brauchwassermodul 21 wird über die ersten Aufnahmebereiche (Heizwasserkammern) 22, welche die solare Wärme auf die zweiten Aufnahmebereiche (Brauchwasserkammern) 23 übertragen, realisiert. Bei ansteigender Temperatur im Solarwärmeübertragungsmodul 4 strömt die solare Wärme aus dem Solarwärmeübertragungsmodul 4, nämlich den Aufnahmebereichen 8, über die Schwerkraftleitung 24 und den Anschluss 45 des Brauchwassermoduls 21 in die Aufnahmebereiche 22 des Brauchwassermoduls 21. Über Deckenplatte und Bodenplatte wird die Wärme aus den ersten Aufnahmebereichen 22 auf die zweiten Aufnahmebereiche (Brauchwasserkammern) 23 übertragen. In die zweiten Aufnahmebereiche 23 strömt über den Kaltwasserzulauf 25 kaltes Frischwasser zu und wird je nach Solarertrag und Leistung vorerwärmt, oder auf Endtemperatur erwärmt, sofern ausreichender Solarertrag ansteht. Bei ausreichendem Solarertrag zirkuliert die Wärme über die Leitung 26 in den Speicher 27, von wo aus es zum Verbrauch entnommen werden kann.

Diese Betriebsweise gewährleistet den automatischen Angleich der Brauchwasserspeichermasse an den Solarertrag ohne jeden Steuerungsaufwand und ohne mechanische Teile, wie Pumpen. Bei geringen und/oder Solarerträgen bei niedrigen Temperaturen wird lediglich die Masse des Brauchwassermoduls 21 durch Solarwärme versorgt. Der eigentliche Warmwasserspeicher 27 wird nur dann mit Solarwärme versorgt, wenn die Temperatur im Brauchwassermodul 21 so weit ansteigt, dass diese über der Temperatur im Speicher 27 liegt. Gleiches gilt auch für das Solarwärmeübertragungsmodul 4. Erst dann wird Wärme aus dem Brauchwassermodul 21 in den Brauchwasserspeicher 27 aufsteigen und kühleres Wasser aus dem Speicher 27 in das Brauchwassermodul 21 absinken, wenn die Temperaturunterschiede entsprechend sind. Dies gilt ebenso für das Solarwärmeübertragungsmodul 4 und den Speicher 10. Zur Gewährleistung der Warmwasserversorgung, wenn kein Solarertrag ansteht, wird der Brauchwasserspeicher 27 über den Heizkessel 16 auf Mindestbetriebstemperatur gehalten. Hierzu kann eine entsprechende Versorgungsleitung (nicht gezeigt) vom Heizkessel 16 zum Speicher 27 vorgesehen werden. Die Brauchwasserzirkulation verläuft im Übrigen aus dem Speicher 27 über die Warmwasserleitung 28 weiter in die Zirkulationsleitung 44 und in die Schichtungsleitung 43, von wo aus es sich je nach Dichte im Brauchwassermodul 21 oder im Speicher27 einschichtet.

Nach dem Stand der Technik beginnt die Wärmeversorgung eines Hauses mit der Aufheizung des Heizwassers im Heizkessel auf die Temperatur, die zur Hausbeheizung erforderlich ist. Mittels Pumpe und Vorlaufleitung wird die Wärme auf die Heizkreise, wie Heizkörper und/oder Fußbodenheizung verteilt. Nach Abgabe der Wärme an die Räume strömt das Heizungswasser über die Rücklaufleitung zurück in den Kessel, um dort wieder erwärmt zu werden und über den Vorlauf den Heizkreisen zugeführt zu werden.

Um auch die Heizungsunterstützung durch eine Solaranlage zu ermöglichen, wird nach dem Stand der Technik in die Rücklaufleitung ein Ventil eingebaut, welches das Rücklaufwasser in einen Pufferspeicher strömen lässt, der durch eine Solaranlage erwärmt worden ist. Die Umschaltung des Ventiles erfolgt über eine Regelung, sobald die Temperatur im Pufferspeicher durch die Solaranlage a. 5°C höher ist als die Temperatur des Mediums im Heizkreisrücklaufes. Ist dies der Fall, wird das Ventil umgeschaltet und das Rücklaufwasser strömt bevor es in den Heizkessel zur Nacherwärmung zurückfließt in den Zulauf im unteren Bereich des Pufferspeichers. An der Speicheroberseite wird das solarerwärmte Wasser aus dem Pufferspeicher entnommen und fließt weiter in den Heizkessel der dann den noch nötigen Temperaturhub bringt. Die Einsparung liegt bei diesem bekannten System in der Temperaturdifferenz, die durch die Solaranlage erbracht wurde. Diese muss vom Kessel nicht mehr erbracht werden. Bei ausreichender Temperatur schaltet der Brenner im Kessel ab.

Nachteilig sind hier jedoch die Mehrkosten für die Regelung zur Steuerung und Umschaltung des Ventiles sowie die erforderlichen, separaten Leitungssysteme zum Puffer und zum Kessel. Außerdem muss die gesamte Speichermasse des Pufferspeichers durch die Solaranlage beheizt werden, bevor der Speicher die Temperatur erreicht hat, die zur Heizungsunterstützung benötigt wird. Bei 10001 Pufferspeicher, 20°C Temperatur im Speicher. Rücklauftemperatur eines Fußbodenheizkreises bei ca. 30°C und Schalthysterie der Regelung zur Umschaltung des Ventiles bei 5°C muss der Pufferspeicher in seiner Temperatur also auf 35°C angehoben werden, bis das Ventil umschaltet und der Heizkreisrücklauf durch den Pufferspeicher strömt. Die Solaranlage muss den Puffer folglich von 20°C auf 35°C erwärmen, erst dann erfolgt eine Umschaltung. Erst die Menge an Solarenergie die den Puffer auf über 35°C erwärmt, kann das Heizungssystem unterstützen. Um den Puffer auf eine Temperatur von 35°C anzuheben, ist eine Wärmemenge von 17,4 kWh nötig. Ein durchschnittliches Einfamilienhaus könnte mit dieser Energiemenge bei 0°C Außentemperatur ca. 8 bis 9 Std voll beheizt werden.

Gemäß der vorliegenden Erfindung erfolgt die Erwärmung des Heizmediums im Heizkessel und nach dem Vorlauf zu den Heizkreisen und Wärmeabgabe an die Räume, fließt das Heizkreiswasser über die Heizungsrücklaufleitung in das Heizungsrücklaufberuhigungsmodul 18, sinkt im Modul ab und drückt im Gegenzug solarerwärmtes Wasser aus dem oberen Bereich des Heizungsrücklaufberuhigungsmodul 18 in den Kessel 16. Auch hier erhält der Kessel lediglich durch die Solaranlage erwärmtes Rücklaufwasser.

Das Solarmodul muss das Heizungsrücklaufberuhigungsmodul 18, das z.B. lediglich 151 Wasserinhalt aufweist, lediglich von 20°C auf 31°C erwärmen, um eine Erwärmung des Rücklaufwassers (30°C) zu erzielen. Dazu ist eine Energiemenge von 0,087 kWh erforderlich. Gegenüber dem Stand der Technik mit 17,4 kWh, also 200mal weniger Energieaufwand. Da sich das solarerwärmte Wasser einfach dem Rücklaufwasser der Heizkreise ohne jegliche Schaltung oder Mechanik beimischt, ist keine Regelung erforderlich. Das Rücklaufwasser der Fußbodenheizung (30°C) strömt immer über das Heizungsrücklaufberuhigungsmodul 18 verlangsamt durch die Aufweitung im Heizungsrücklaufberuhigungsmodul 18 zurück in den Kessel 16, wo es bei Bedarf nachgeheizt wird und wieder in die Heizkreise strömt. Ist Solarwärme im Solarwärmeübertragungsmodul 4, wird diese praktisch ohne jegliches Zutun dem Heizungsrücklauf beigemischt bevor dieser zurück in den Kessel fließt. So wird alles an Solarwärme aufgenommen was in das Solarwärmeübertragungsmodul 4 gelangt, selbst wenn das Heizungsrücklaufberuhigungsmodul 18 nur 30,1 °C aufweist, bedeutet dies einen Zugewinn.

Weitere Vorteile sind, dass keine Leitungen von und zum Puffer erforderlich sind, da das Heizungsrücklaufberuhigungsmodul im Heizungsrücklauf wie eine Rohraufweitung integriert ist. Es sind weiterhin kein Pumpen, keine Regelung, kein Umschaltventil, keine Zwischenspeicherung, keine Temperaturüberhöhungen zur Umschaltung, und dergleiche erforderlich, sondern die Wärmebeimischung erfolgt ohne Verluste und es wird keine unnötige Masse (151 Inhalt im Heizungsrücklaufberuhigungsmodul) erwärmt. Erst wenn die Solarerträge so hoch sind, dass sie den Wärmebedarf des Hauses übersteigen, kann die Temperatur im Heizungsrücklaufberuhigungsmodul ansteigen und der Überschuss über das Schwerkraftschichtungssystem in den Speicher aufsteigen, wo es dann vom Heizungssystem abgerufen werden kann. Auch bei dieser Übergabe entfallen durch die erfindungsgemäße Konstruktion die sonst nötigen Temperaturüberhöhungen und Übergabeverluste. Das erfindungsgemäße System ist zudem bei der Speicherung effektiver, da es keinerlei überzählige Anschlüsse und damit über keinerlei Dämmlücken verfügt und die Wärme zusätzlich über den Thermosyphon 17 gesichert wird. Ferner erfolgt eine bessere Energieausnutzung der Speicher durch einseitige Durchströmung und bessere Schichtungsbeständigkeit, da keine Verwirbelungen auftreten. Durch langsame Einströmung und Vermeidung von Quereinströmungen erfolgt ein insgesamt beruhigter Betrieb im Speichersystem.

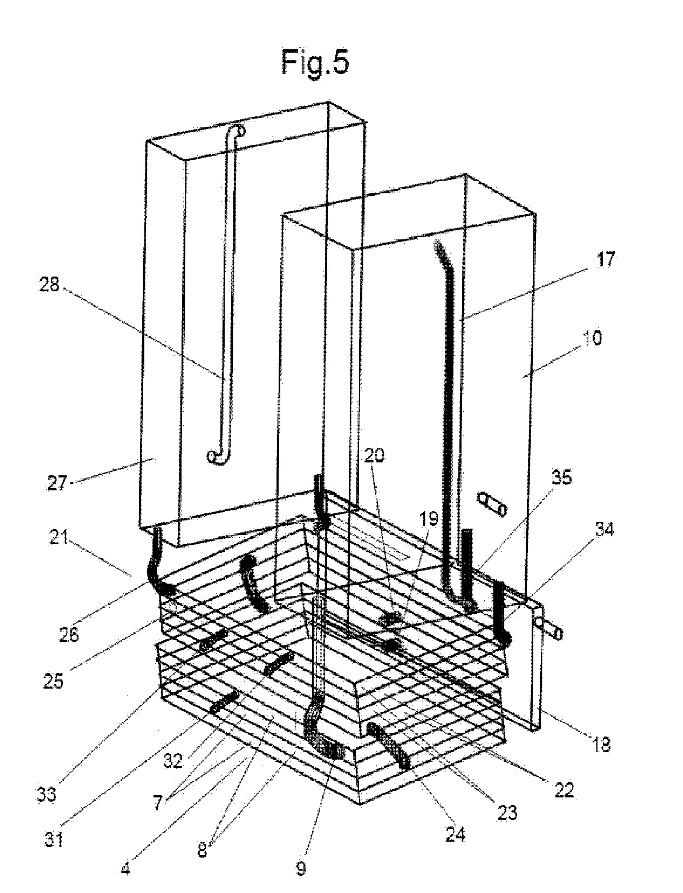

Die Fig. 5 bis 8 zeigen die Verwirklichung eines erfindungsgemäßen Heizsystems, wie in Fig. 4, dargestellt in verschiedenen Darstellungen.

Die Fig. 5 zeigt eine perspektivische Darstellung eines Heizsystems, wie es schematisch bereits in der Fig. 4 dargestellt worden ist, wobei die entsprechenden Komponenten mit gleichen Bezugszeichen versehen sind.

Das modulweise aufgebaute Heizsystem umfasst ein quaderförmiges Gestell 30, in dem von unten nach oben das Solarwärmeübertragungsmodul 4 und das Brauchwassermodul 21 gelagert sind. Auf der Oberseite des Gestells 30 sind zwei Speicher 10 und 27 angeordnet, die als quaderförmige Behälter ausgeführt sind. Im hinteren Bereich des Gestells 30 ist zwischen zwei Stützstreben entlang einer Längsseite des Gestells das Heizungsrücklaufanhebungs- und Beruhigungsmodul (HRB-Modul) 18 angeordnet.

Das Solarwärmeübertragungsmodul 4 und das Brauchwassermodul 21 sind baugleich als Baueinheiten mit jeweils vier überlagerten quader- bzw. plattenförmigen Kammern ausgeführt, wobei jeweils zwei quader- bzw. plattenförmige Kammern einen ersten Aufnahmebereich 7, 22 und einen zweiten Aufnahmebereich 8, 23 für jeweils ein erstes Medium und ein zweites Medium bilden.

Die quaderförmigen bzw. plattenartigen Kammern des Solarwärmeübertragungsmoduls 4 und des Brauchwassermoduls 21 sind gegenüber der Horizontalen leicht schräg nach oben in dem Gestell 30 gelagert, so dass sie jeweils eine schiefe Ebene definieren.

Die quader- bzw. plattenförmigen Kammern der jeweiligen Aufnahmebereiche 7, 8, 22, 23 sind jeweils über Verbindungsrohre 31, 32, 33 miteinander verbunden, so dass innerhalb eines Aufnahmebereichs 7, 8, 22, 23 ein Austausch der darin enthaltenen Medien möglich ist.

Das Solarwärmeübertragungsmodul 4 weist in dem ersten Aufnahmebereich 7 einen nicht näher dargestellten Zufluss und Abfluss des Solarwärmeträgers auf, welcher beim Sonnenkollektor mit Sonnenenergie erwärmt worden ist. Das im zweiten Aufnahmebereich 8 vorgesehene Verbrauchsmedium, nämlich das Heizungswasser eines Heizkreislaufs, kann über die Verbindungsrohre 19, 20 in das HRB-Modul 18 des Heizkreislaufes fließen bzw. von dort wieder zurückfließen, so dass das durch den Solarwärmeträger im ersten Aufnahmebereich 7 erhitzte Verbrauchsmedium im zweiten Aufnahmebereich 8 unmittelbar in den Heizkreislauf eingeführt werden kann, wobei das HRB-Modul, welches ebenfalls eine quaderförmige Kammer, die senkrecht gestellt ist, aufweist, durch eine niedrige Fließgeschwindigkeit des Heizwassers im HRB-Modul und Ausbildung einer Schichtstruktur gemäß der temperaturbedingten Dichte im HRB-Modul eine effektive Aufnahme des Verbrauchsmediums des Solarwärmeübertragungsmoduls 4, also des Heizungswassers, in den Heizkreislauf gewährleistet.

Darüber hinaus ist die oberste quaderförmige Kammer des zweiten Aufnahmebereichs 8 des Solarwärmeübertragungsmoduls 4 mit dem quaderförmigen Speicher 10 über die Rohrleitung 9 verbunden, so dass erhitztes Verbrauchsmedium, also Heizungswasser, in den Speicher 10 aufsteigen kann und sich dort entsprechend der temperaturbedingten Dichte in einer Schichtstruktur anordnen kann.

Der Speicher 10 weist einen Wärmesiphon 17 auf, der zur Entnahme des im Speicher 10 gespeicherten Heizungswassers dient, wobei die Entnahmeleitung 17 in Form des Wärmesiphons in den Heizkreislauf mündet, sodass gespeichertes Heizmedium in den Heizungskreislauf eingespeist werden kann. Die Entnahmeleitung 17 in Form eines Wärmesiphons ist so ausgeführt, dass die Rohrleitung im oberen Bereich des Speichers 10 in gekrümmter Form aus dem quaderförmigen Behälter des Speichers 10 herausgeführt ist und anschließend entlang der Behälteraußenwand vorzugsweise innerhalb der Wärmedämmung des Behälters des Speichers 10 im Wesentlichen senkrecht nach unten geführt wird, um durch Vermeidung von horizontalen oder zum Speicher 10 abfallenden Rohrleitungen ein Rückfluss von kaltem, beispielsweise in der Rohrleitung 17 abgekühlten Verbrauchsmediums zu verhindern.

Der Speicher 10 ist wiederum über zwei Rohrleitungen 34 und 35 mit dem HRB-Modul 18 verbunden, so dass auch unmittelbar eine Einspeisung von warmem Heizungswasser aus dem Speicher 10 bzw. Speicherung von überschüssigem warmem Heizungswasser aus dem HRB-Modul 18 im Speicher 10 ermöglicht wird.

Das Solarwärmeübertragungsmodul 4 ist weiterhin über eine Rohrleitung 24 mit dem ersten Aufnahmebereich 22 des Brauchwassermoduls 21 verbunden, so dass warmes Verbrauchsmedium, also Heizungswasser, aus dem Solarwärmeübertragungsmodul 4 in den ersten Aufnahmebereich 22 des Brauchwassermoduls 21 aufsteigen kann. Dort kann es das kalte Frischwasser, welches über den Zufluss 25 in den zweiten Aufnahmebereich 23 des Brauchwassermoduls 21 zugeführt wird, erwärmen. Das erwärmte Wasser im zweiten Aufnahmebereich 23 kann über die Verbindungsleitung 26 in den Speicher 27 aufsteigen und sich dort entsprechend der temperaturbedingten Dichte in einer Schichtstruktur mit dem wärmsten Wasser oben und immer kühler werdenden Wasser weiter unten im Behälter des Speichers 27 anordnen. Über die Warmwasserentnahmeleitung 28, die wiederum in Form eines Wärmesiphons ausgeführt ist, kann das warme Wasser aus dem oberen Bereichs des Speichers 27 entnommen werden.

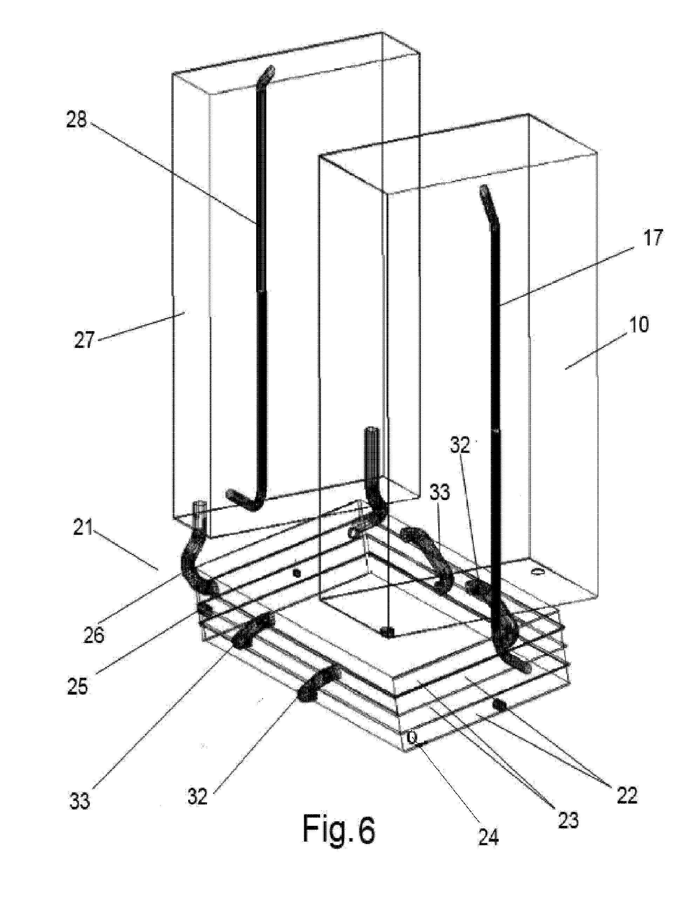

Die Figuren 6 bis 8 zeigen nunmehr einzelne Komponenten des Heizungssystems aus Fig. 5 zur besseren Verdeutlichung in einzelner Darstellung. So ist in Fig. 6 das Brauchwassermodul 21 mit den beiden Speichern 10 und 27 dargestellt. Deutlich sind die quaderförmigen Kammern zur Bildung des ersten Aufnahmebereichs 22 und des zweiten Aufnahmebereichs 23 zu erkennen, die in abwechselnder Weise übereinander angeordnet sind. Zwischen den einzelnen quaderförmigen Kammern der Aufnahmebereich 22 und 23 sind Verbindungsleitungen 32, 33 vorgesehen, die einen Austausch zwischen den quaderförmigen Kammern des jeweiligen Aufnahmebereichs 22, 23 ermöglichen. Darüber hinaus sind die Anschlüsse des Brauchwassermoduls 21 an den Speicher 27 in Form der Rohrleitung 26 sowie eines nicht dargestellten Solarwärmeübertragungsmoduls 4 in Form der Leitung 24 gezeigt. Auch der Kaltwasserzulauf 25 ist entsprechend dargestellt.

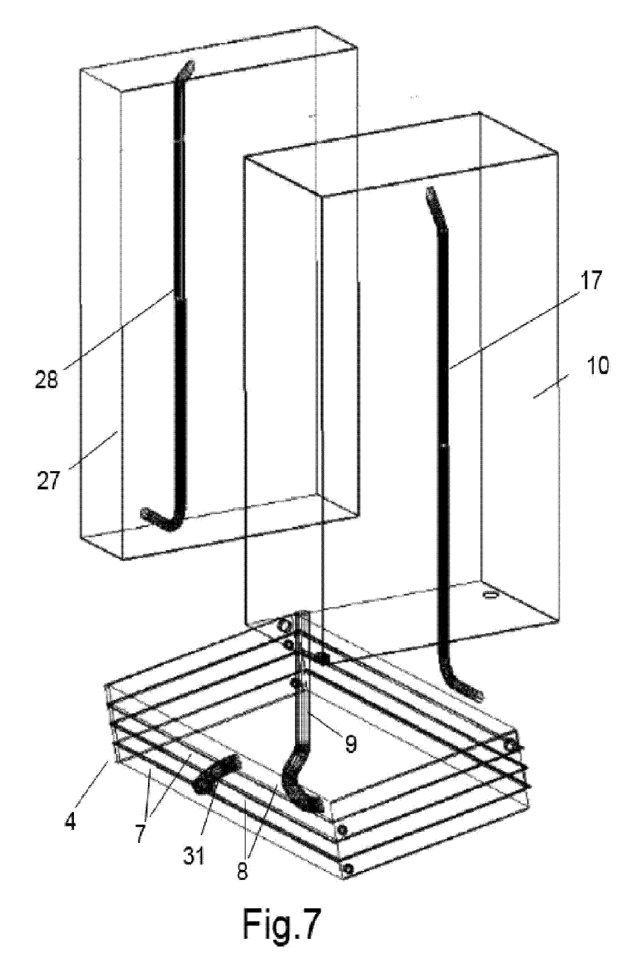

Die Fig. 7 zeigt dagegen das Solarwärmeübertragungsmodul 4 mit den Speichern 10 und 27, wobei wiederum die Anordnung der quaderförmigen Kammern zur Bildung des ersten Aufnahmebereichs 7 und des zweiten Aufnahmebereichs 8 dargestellt ist und beispielhaft auch eine Verbindungsleitung 31 zwischen den quaderförmigen Kammern des zweiten Aufnahmebereichs 8 zu sehen ist. Darüber hinaus ist in der Fig. 7 die Verbindungsleitung 9 zwischen dem zweiten Aufnahmebereich 8 und dem Speicher 10 zu erkennen.

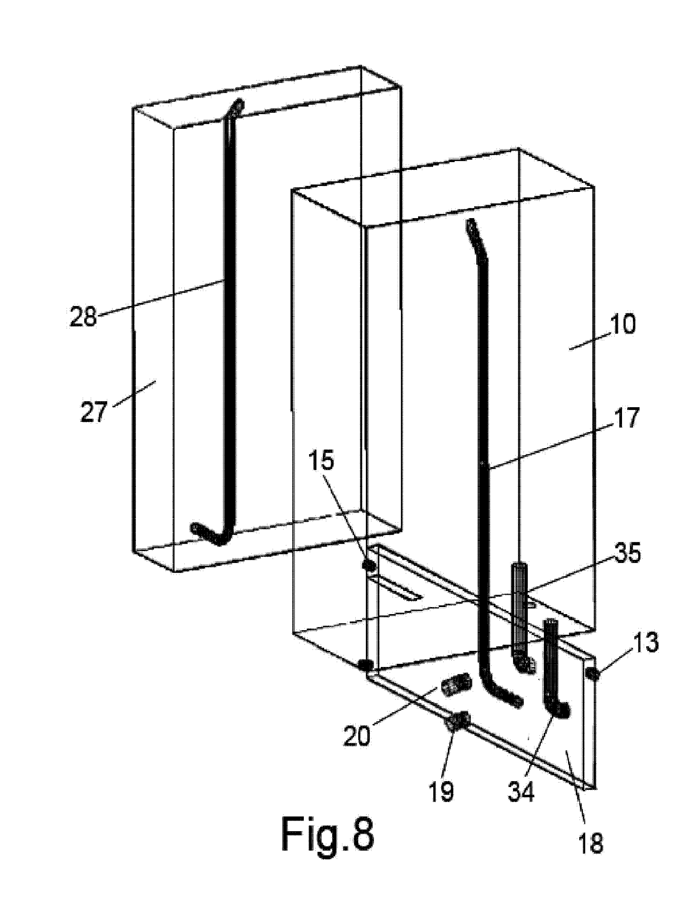

Die Fig. 8 wiederum zeigt das HRB-Modul 18 mit den Speichern 27 und 10. In Fig. 8 sind die Verbindungsleitungen 20 und 19 zum nicht dargestellten Solarwärmeübertragungsmodul 4 als auch die Verbindungsleitungen 34 und 35 des HRB-Moduls 18 zum Speicher 10 zu erkennen. Auch der Heizungsrücklauf 15 und die Heizwasserabgabeleitung 13 sind dargestellt.

Der Betrieb eines Heizungssystems, wie er in Fig. 4 dargestellt ist, funktioniert nun in der Weise, dass ein Solarwärmeträger, wie beispielsweise ein frostsicheres Flüssigkeitsgemisch oder dergleichen, über die Zuführleitung 2 in den Sonnenkollektor 1 gepumpt wird, wo er Sonnenenergie aufnimmt. Über die Rückleitung 3 gelangt der erwärmte Solarwärmeträger in das Solarwärmeübertragungsmodul 4, wobei beispielsweise eine temperaturgesteuerte Pumpe die Bewegung des Solarwärmeträgers im Solarkreislauf bewirken kann. Die Temperaturregelung kann hierbei auf der absoluten Temperatur des Solarwärmeträgers im Sonnenkollektor 1 oder einer Temperaturdifferenz zwischen der Temperatur des Solarwärmeträgers im Sonnenkollektor 1 und im Solarwärmeübertragungsmodul 4 basieren.

Im Heizkreislauf mit den Heizflächen 14 und dem HRB-Modul 18 wird das Verbrauchsmedium, wie beispielsweise Wasser, ebenfalls durch eine Pumpe im Kreis geführt und kann beispielsweise durch einen Brenner 16 bei Bedarf zusätzlich aufgeheizt werden. Ansonsten erfolgt im HRB-Modul 18 die Zufuhr von im Solarwärmeübertragungsmodul 4 aufgeheiztem Verbrauchsmedium aus dem zweiten Aufnahmebereich 8 des Solarwärmeübertragungsmoduls 4, ohne dass hierfür irgendwelche Pumpen oder dergleichen vorgesehen werden müssen, da die Zufuhr des aufgeheizten Verbrauchsmediums automatisch durch die Schwerkraft entsprechend der temperaturbedingten Dichte des Verbrauchsmediums unter Anordnung des Verbrauchsmediums in einer Schichtstruktur im zweiten Aufnahmebereich 8 des Solarwärmeübertragungsmoduls 4 und des HRB-Moduls 18 erfolgt. Zusätzlich wird überschüssige Wärme im Speicher 10 gespeichert, welche zusätzlich durch die Heizungssteuerung in den Wärmekreislauf über ein entsprechendes Wegeventil eingeführt werden kann.

Gleichzeitig wird automatisiert über das Brauchwassermodul 21 Warmwasser bereitet, wobei aufgrund der im Brauchwassermodul 21 und im Speicher 27 eingestellten Schichtstruktur gemäß der temperaturbedingten Dichte des Warmwassers ebenfalls keine Steuerung oder Pumpen zur Füllung des Speichers 27 erforderlich sind. Dabei bedürfen auch der Kaltwasserzulauf und die Warmwasserentnahme weder einer Regelung und/oder Steuerung noch irgendwelcher Pumpen, da diese durch den am Haus anstehenden Kaltwasserdruck beim Öffnen einer Warmwasserentnahmestelle durch die entstehende Druckdifferenz automatisch bewirkt werden. Somit kann die Frischwasser und Warmwasserversorgung sowie die Wärmeübertragung auf das Heizungswasser vollautomatisiert erfolgen, ohne dass Regelungen oder Steuerungen bzw. entsprechende Antriebsmittel, wie Pumpen, eingesetzt werden müssten. Lediglich eine Warmwasserzirkulation zur Bereitstellung von warmem Wasser an jeglicher Warmwasserentnahmestelle zu jeder beliebigen Zeit kann den Einsatz einer Pumpe erfordern.

Anstelle der im Ausführungsbeispiel der Figuren 4 bis 8 dargestellten Erwärmung des Warmwassers mit dem Verbrauchsmedium des Solarwärmeübertragungsmoduls 4 ist selbstverständlich auch die Verwendung des Solarwärmeträgers als Medium für den ersten Aufnahmebereich 22 des Brauchwassermoduls 21 denkbar.

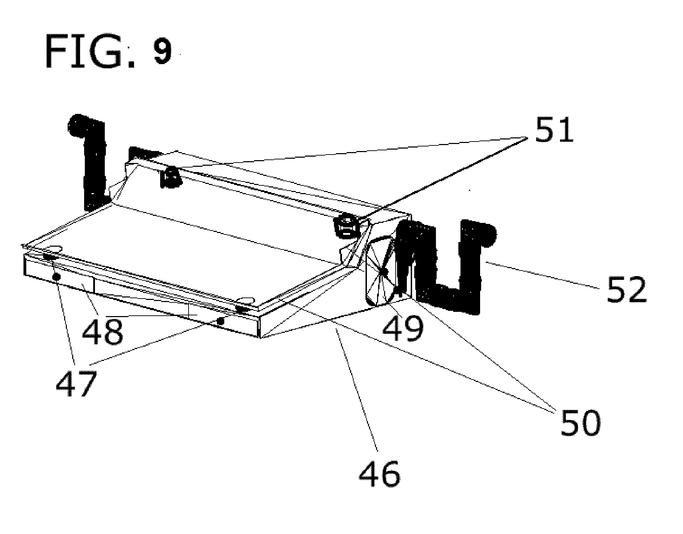

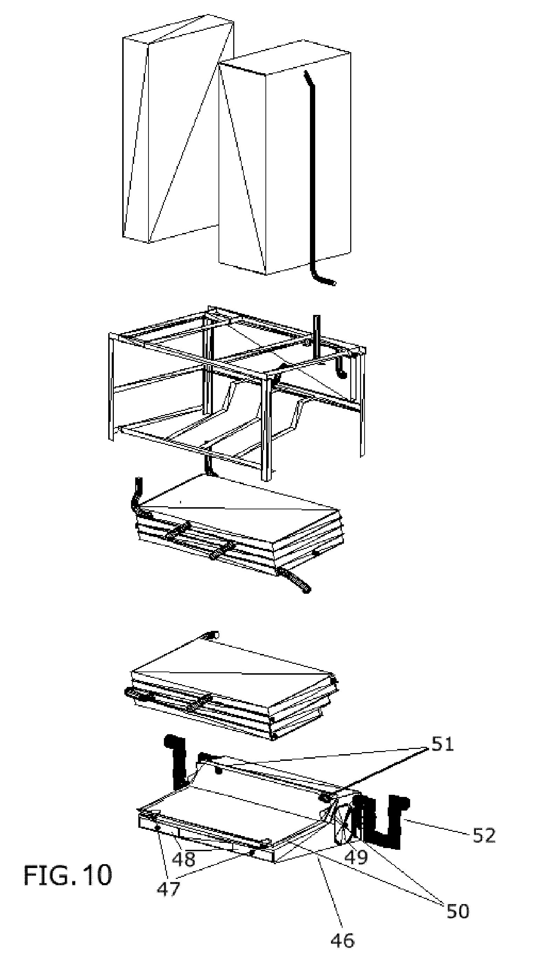

Die Figuren 9 und 10 zeigen ein weiteres Modul, welches in Kombination mit den Ausführungsformen der Figuren 1 bis 8 Verwendung finden kann. Bei diesem Modul handelt es sich um ein Abwasserwärmerückgewinnungssystem, welches einen Abwasserbehälter 46 aufweist, in den über eine Abwasserleitung Abwasser eingeleitet wird, welches insbesondere aus Bereichen stammt, in denen warmes Abwasser anfällt, also beispielsweise Abwässer von Waschbecken, Duschen, Badewannen oder von Geschirrspülmaschinen oder Waschmaschinen. Das Abwasser gelangt in den Abwasserbehälter 46, in dem das Abwasser wiederum entsprechend der temperaturbedingten Dichte geschichtet gelagert wird, so dass warmes Abwasser an der Oberseite des Behälters 46 vorliegt, während kaltes Abwasser in den unteren Bereich des Abwasserbehälters 46 absinkt. Das Abwasserwärmerückgewinnungssystem weist zudem einen Wärmeübertragungsbehälter 50 auf, der oberhalb des Abwasserbehälters 46 angeordnet ist und mit diesem über Zirkulationsleitungen 47, 51 verbunden ist. Über die Zirkulationsleitungen 51, die in einem oberen Bereich des Abwasserbehälters 46 mit dem Wärmeübertragungsbehälter 50 verbunden sind, strömt warmes Abwasser in den Wärmeübertragungsbehälter 50 ein, während die Zirkulationsleitungen 47 im unteren Bereich der Wärmeübertragungsbehälter 50 bzw. des Abwasserbehälters 46 kaltes Wasser in den Abwasserbehälter 46 absinken kann. Der Wärmeübertragungsbehälter ist wiederum geneigt zur Horizontalen angeordnet, um die Schichtungsvorgänge zu unterstützen, während der Abwasserbehälter 46 keilförmig ausgebildet ist.

Der Abwasserbehälter 46 weist einen Abwasserablauf 52 auf, über den Abwasser aus dem Abwasserbehälter 46 ablaufen kann, wenn neues Abwasser über den Abwasserzulauf in den Abwasserbehälter 46 einströmt. Der Abwasserablauf 52 ist im unteren Bereich des Abwasserbehälters 46 angeschlossen und weist einen Siphon auf.

Wie in Fig. 10 zu sehen ist, ist das Abwasserwärmerückgewinnungssystem unterhalb des Solarwärmeübertragungsmoduls 4 angeordnet, wie es in den Figuren 1 bis 8 dargestellt ist. Durch das Abwasserwärmerückgewinnungssystem kann somit Wärme über den Wärmeübertragungsbehälter 50 an das Solarwärmeübertragungsmodul 4 übergeben und somit die Solarheizung unterstützt werden. Allerdings kann über das Abwasserwärmerückgewinnungssystem die an dem Wärmeübertragungsbehälter 50 bereitgestellte Wärme auch an jede andere Komponente eines Heizsystems, wie beispielsweise einen Wärmespeicher, übergeben werden. Entsprechend wird für das Abwasserwärmerückgewinnungssystem selbstständig und in Kombination mit den anderen Aspekten der vorliegenden Erfindung Schutz begehrt.

Die Erfindung weist somit folgende Merkmale, die alle miteinander kombiniert werden können:
1. Heizsystem für die Raumheizung und/oder Warmwasserbereitung unter Nutzung von Solarenergie mit mindestens einem Wärmetauscher (4) zur Übertragung von Wärmeenergie, die ein Wärmeträgermedium durch Sonnenenergie aufgenommen hat, von dem Wärmeträgermedium auf ein Verbrauchsmedium und mindestens einem Speicher (10) zur Speicherung der Wärme,
   wobei
   Wärmetauscher (4) und Speicher (10) getrennt voneinander als separate Module aufgebaut sind.
2. Heizsystem nach Merkmal 1,
   wobei
   das Heizsystem mindestens ein Heizungsrücklaufberuhigungsmodul (18) umfasst.
3. Heizsystem nach Merkmal 1 oder 2,
   wobei
   der Wärmetauscher (4) und/oder der Speicher (10) und/oder ein Heizungsrücklaufberuhigungsmodul (18) so aufgebaut sind, dass sich das Wärmeträgermedium, nämlich das Wärmequellenmedium und/oder das Verbrauchsmedium, darin selbstständig geschichtet gemäß der temperaturabhängigen Dichte lagert.
4. Heizsystem für die Raumheizung und/oder Warmwasserbereitung, insbesondere nach einem der vorhergehenden Merkmale, mit mindestens einem Wärmetauscher (4), der einen ersten Aufnahmebereich (7) für ein erstes Medium, welches von einer Wärmequelle erwärmt werden kann, und einem zweiten Aufnahmebereich (8) für ein zweites Medium aufweist, welches die Wärme von dem ersten Medium aufnimmt, speichert und an Verbraucher abgibt,
   wobei
   der erste Aufnahmebereich (7) und/oder der zweite Aufnahmebereich (8) in ihrem Strömungsquerschnitt gegenüber dem Strömungsquerschnitt der jeweiligen Zuflüsse so stark vergrößert sind, dass die Durchlaufgeschwindigkeit im ersten und/oder zweiten Aufnahmebereich sehr viel kleiner als in den jeweiligen Zuflüssen ist, und zwar so, dass sich eine Schichtung des ersten und/oder zweiten Mediums im jeweiligen Aufnahmebereich gemäß der temperaturbedingten Dichte einstellt.
5. Heizsystem nach Merkmal 4,
   wobei
   das Heizsystem mindestens einen Speicher (10,27) und/oder ein Heizungsrücklaufberuhigungsmodul (18) umfasst, die insbesondere getrennt voneinander ausgebildet sind.
6. Heizsystem nach Merkmal 5,
   wobei
   der Speicher (10, 27) und/oder das Heizungsrücklaufberuhigungsmodul (18) so aufgebaut sind, dass sich das jeweilige Wärmeträgermedium darin selbstständig geschichtet gemäß der temperaturabhängigen Dichte lagert.
7. Heizsystem für die Raumheizung und/oder Warmwasserbereitung, insbesondere nach einem der vorhergehenden Merkmale, mit einem Heizkreislauf, durch den ein Heizmedium geführt wird und in dem Heizelemente (14) angeordnet sind, bei denen das Heizmedium Wärmeenergie abgibt,
   wobei
   im Kreislauf in Durchlaufrichtung nach den Heizelementen ein Heizungsrücklaufberuhigungsmodul (18) angeordnet ist, wobei das Heizungsrücklaufberuhigungsmodul mit einer Wärmequelle gekoppelt ist, die ein Heizmedium mit hoher Temperatur aufweist, und zwar so, dass das Heizmedium der Wärmequelle bei gegenüber dem Heizmedium im Heizungsrücklaufberuhigungsmodul erhöhter Temperatur auf Grund der Schwerkraft in das Heizungsrücklaufberuhigungsmodul fließen kann, und wobei bei dem Heizungsrücklaufberuhigungsmodul (18) der Strömungsquerschnitt gegenüber dem Heizkreislauf so stark erhöht ist, dass die Durchlaufgeschwindigkeit sehr viel kleiner als im übrigen Heizkreislauf ist, und zwar so, dass sich eine Schichtung des Heizmediums im Heizungsrücklaufberuhigungsmodul gemäß der temperaturbedingten Dichte einstellt.
8. Heizsystem nach Merkmal 7,
   wobei
   die Wärmequelle ein Wärmetauscher (4) eines Solarheizsystems oder eines Abwasserwärmerückgewinnungssystems ist.
9. Heizsystem nach einem der Merkmale 7 oder 8,
   wobei
   das Heizsystem mindestens einen Speicher (10,27) und/oder weitere Wärmetauscher (21) umfasst.
10. Heizsystem nach Merkmal 9,
   wobei
   ein Wärmetauscher (4,21) und/oder ein Speicher (10,27) so aufgebaut sind, dass das Wärmeträgermedium sich darin selbstständig geschichtet gemäß der temperaturabhängigen Dichte lagert.
11. Heizsystem nach einem der Merkmale 1, 2, 3, 6 oder 9,
   wobei
   ein Wärmetauscher (4,21) und ein Speicher (10,27) und optional vorgesehene weitere Module, wie weitere Wärmetauscher oder Speicher zumindest teilweise miteinander verbunden sind, sodass sich eine selbständige Schichtung des Wärmeträgermediums gemäß der temperaturabhängigen Dichte zumindest teilweise über die Module hinweg ergibt.
12. Heizsystem nach einem der Merkmale 1, 2, 3, 6, 9 oder 11,
   wobei
   Wärmetauscher (4) und Speicher (10) und optional vorgesehene weitere Module, wie weitere Wärmetauscher (21) oder Speicher (27), oder das Heizungsrücklaufberuhigungsmodul (18) zumindest teilweise so miteinander verbunden sind, dass das Wärmeträgermedium zwischen den verbundenen Modulen auf Grund der temperaturabhängigen Dichte, insbesondere ausschließlich auf Grund des Schwerkraftantriebs bewegt wird und/oder eine Zirkulation ermöglicht wird.
13. Heizsystem nach einem der vorhergehenden Merkmale,
   wobei
   das Heizsystem mehrere Wärmetauschermodule (4,21) umfasst, die miteinander gekoppelt sind.
14. Heizsystem nach einem der vorhergehenden Merkmale,
   wobei
   die Wärmetauschermodule (4,21) seriell und/oder parallel zueinander geschaltet sind.
15. Heizsystem nach einem der vorhergehenden Merkmale,
   wobei
   das Heizsystem eine Zirkulationsleitung für ein Verbrauchsmedium umfasst, welche von einer Entnahmeleitung zu einem Wärmetauscher verläuft.
16. Wärmetauscher, insbesondere für die Raumheizung und/oder Warmwasserbereitung, insbesondere für ein Solarheizsystem, mit einem ersten Aufnahmebereich (7,22) für ein erstes Medium, welches von einer Wärmequelle erwärmt werden kann, und einem zweiten Aufnahmebereich (8,23) für ein zweites Medium, welches die Wärme von dem ersten Medium aufnimmt, speichert und an Verbraucher abgibt,
   wobei
   der erste Aufnahmebereich und/oder der zweite Aufnahmebereich in ihrem Strömungsquerschnitt gegenüber dem Strömungsquerschnitt der jeweiligen Zuflüsse so stark vergrößert sind, dass die Durchlaufgeschwindigkeit im ersten und/oder zweiten Aufnahmebereich sehr viel kleiner als in den jeweiligen Zuflüssen ist, und zwar so, dass sich eine Schichtung des ersten und/oder zweiten Mediums im jeweiligen Aufnahmebereich gemäß der temperaturbedingten Dichte einstellt.
17. Wärmetauscher nach Merkmal 16,
   wobei
   erster und zweiter Aufnahmebereich (7,8,22,23) als quaderförmige Platten ausgebildet sind, die insbesondere abwechselnd gestapelt sind und vorzugsweise gegenüber der Horizontalen geneigt angeordnet sind.
18. Wärmespeicher, insbesondere für die Raumheizung und/oder Warmwasserbereitung zur Speicherung von Wärmeenergie oder einer Flüssigkeit mit gegenüber der Umgebung erhöhter Temperatur, wobei der Wärmespeicher einen wärmeisolierten Behälter aufweist, der einen Zufluss im Bereich der Behälterunterseite und einen Abfluss im Bereich der Behälteroberseite aufweist, wobei der Abfluss (17) als Wärmesiphon ausgeführt ist, welcher in einem Bogen aus dem Behälterinnenraum der Schwerkraft folgend nach unten geführt ist und mindestens einen Abschnitt mit einem vertikalen Richtungsanteil aufweist, so dass ein Rückfluss aus dem Abfluss nur durch einen der Schwerkraft entgegen gerichteten Anstieg möglich ist.
19. Wärmespeicher nach Merkmal 18,
   wobei
   der Abfluss einen vertikal verlaufenden Leitungsabschnitt umfasst.
20. Wärmespeicher nach Merkmal 18 oder 19,
   wobei
   der Abfluss in der Wärmeisolierung des Behälters aufgenommen ist.
21. Wärmespeicher, insbesondere für die Raumheizung und/oder Warmwasserbereitung zur Speicherung von Wärmeenergie oder einer eines Wärmeträgermediums mit gegenüber der Umgebung erhöhter Temperatur, wobei der Wärmespeicher einen wärmeisolierten Behälter aufweist und wobei im Behälter des Speichers keine Einbauten vorhanden sind, die eine Durchströmung in einer einzigen Richtung stören könnten.
22. Abwasserwärmerückgewinnungssystem, bei welchem ein Abwasserbehälter (46) vorgesehen ist, in welchem Abwasser zwischengespeichert werden kann, wobei der Strömungsquerschnitt des Abwasserbehälters (46) gegenüber einer Abwasserzuführleitung so stark erhöht ist, dass die Durchlaufgeschwindigkeit sehr viel kleiner als der Abwasserzuführleitung ist, und zwar so, dass sich eine Schichtung des Heizmediums im Abwasserbehälter gemäß der temperaturbedingten Dichte einstellt.
23. Abwasserwärmerückgewinnungssystem nach Merkmal 22, bei welchem ein Wärmetauscherbehälter (50) vorgesehen ist, der in Verbindung mit dem Abwasserbehälter (46) steht, so dass das Abwasser zwischen dem Abwasserbehälter (46) und dem Wärmetauscherbehälter (50) auf Grund der temperaturabhängigen Dichte, insbesondere ausschließlich auf Grund des Schwerkraftantriebs bewegt wird und/oder eine Zirkulation ermöglicht wird.
24. Verfahren zur Übertragung und/oder Speicherung von Wärme insbesondere für die Raumheizung und/oder Warmwasserbereitung, welches die Schritte umfasst:
   Bereitstellung eines ersten Wärmeträgermediums, welches von einer Wärmeaufnahmestelle zu einer Wärmeabgabestelle oder umgekehrt transportiert wird, wobei das Medium in einer Leitung strömt, die einen ersten Strömungsquerschnitt aufweist,
   Bereitstellung eines zweiten Strömungsquerschnitts an einer Wärmeaufnahme- oder Abgabestelle, wobei der zweite Strömungsquerschnitt viel größer ist als der erste Strömungsquerschnitt.
25. Verfahren nach Merkmal 24,
   wobei
   sich das erste Wärmeträgermedium entsprechend der temperaturabhängigen Dichte im Bereich des zweiten Strömungsquerschnitts schichtet.
26. Verfahren zur Übertragung und/oder Speicherung von Wärme, vorzugsweise für die Raumheizung und/oder Warmwasserbereitung und/oder Wämerückgewinnung, insbesondere nach Merkmal 24 oder 25, welches die Schritte umfasst:
   Bereitstellung eines Wärmeübertragungsbereichs, bei dem Wärme von einem ersten Wärmeträger auf einen zweiten Wärmeträger übertragen wird,
   Bereitstellung eines Speichers oder Wärmeträgerübernahmebereichs, in denen der zweite Wärmeträger aufgenommen wird,
   Schichten des Wärmeträgermediums im Wärmeübertragungsbereich und im Speicher oder Wärmeträgerübernahmebereich entsprechend der temperaturabhängigen Dichte des zweiten Wärmeträgermediums.
27. Verfahren nach Merkmal 26,
   wobei
   das zweite Wärmeträgermedium aus dem Speicher und/oder Wärmeträgerübernahmebereich entnommen wird.
28. Verfahren zum Betrieb eines Heizsystems für die Raumheizung und/oder Warmwasserbereitung und/oder Wärmerückgewinnung, insbesondere nach einem der Merkmale 1 bis 15, wobei
   ein Speicher zur Aufnahme eines Wärmeträgermediums bereitgestellt wird, wobei das
   Wärmeträgermedium nur durch Beimischung und/oder Einzirkulation eines Wärmeträgermediums mit höheren Temperaturen erwärmt wird.
29. Verfahren zum Betrieb eines Heizsystems, insbesondere nach einem der Merkmale 1 bis 15, vorzugsweise nach Merkmal 28,
   wobei
   ein Wärmeträgermedium Sonnenenergie aufnimmt und auf ein Verbrauchsmedium überträgt, wobei die Temperatur des Wärmeträgermediums unter 25°C, insbesondere unter 20°C liegen kann.
30. Verfahren zur Wärmerückgewinnung von Abwasser zu Heizzwecken und/oder zur Bereitung von Warmwasser, bei welchem das Abwasser in einem Abwasserbehälter gesammelt und entsprechend der temperaturabhängigen Dichte des Abwassers geschichtet wird, so dass warmes Abwasser in einem Wärmeübergangsbereich Wärme an ein Wärmeträgermedium abgeben kann.
31. Verfahren nach Merkmal 30, bei welchem die Wärme an ein Wärmeträgermedium eines Solarheizsystems übergeben wird.
Obwohl die vorliegende Erfindung anhand der dargestellten Ausführungsbeispiele detailliert beschrieben worden ist, ist für den Fachmann selbstverständlich, dass die Erfindung nicht auf diese Ausführungsbeispiele beschränkt ist, sondern dass vielmehr Änderungen in der Weise vorgenommen werden können, dass einzelne Merkmale weggelassen oder andersartige Kombinationen von Merkmalen verwirklicht werden, ohne dass der Schutzbereich der beigefügten Ansprüche verlassen wird. Die vorliegende Erfindung umfasst insbesondere sämtliche Kombinationen aller vorgestellten Einzelmerkmale.

## Patentansprüche

1. Heizsystem für die Raumheizung und/oder Warmwasserbereitung unter Nutzung von Solarenergie mit mindestens einem Wärmetauscher (4) zur Übertragung von Wärmeenergie, die ein Wärmeträgermedium durch Sonnenenergie aufgenommen hat, von dem Wärmeträgermedium auf ein Verbrauchsmedium und mindestens einem Speicher (10) zur Speicherung der Wärme,
**dadurch gekennzeichnet, dass**
Wärmetauscher (4) und Speicher (10) getrennt voneinander als separate Module aufgebaut sind.

2. Heizsystem nach Anspruch 1,
**dadurch gekennzeichnet, dass**
das Heizsystem mindestens ein Heizungsrücklaufberuhigungsmodul (18) umfasst und/oder **dadurch gekennzeichnet, dass**
der Wärmetauscher (4) und/oder der Speicher (10) und/oder ein Heizungsrücklaufberuhigungsmodul (18) so aufgebaut sind, dass sich das Wärmeträgermedium, nämlich das Wärmequellenmedium und/oder das Verbrauchsmedium, darin selbstständig geschichtet gemäß der temperaturabhängigen Dichte lagert.

3. Heizsystem für die Raumheizung und/oder Warmwasserbereitung, insbesondere nach einem der vorhergehenden Ansprüche, mit mindestens einem Wärmetauscher (4), der einen ersten Aufnahmebereich (7) für ein erstes Medium, welches von einer Wärmequelle erwärmt werden kann, und einem zweiten Aufnahmebereich (8) für ein zweites Medium aufweist, welches die Wärme von dem ersten Medium aufnimmt, speichert und an Verbraucher abgibt,
**dadurch gekennzeichnet, dass**
der erste Aufnahmebereich (7) und/oder der zweite Aufnahmebereich (8) in ihrem Strömungsquerschnitt gegenüber dem Strömungsquerschnitt der jeweiligen Zuflüsse so stark vergrößert sind, dass die Durchlaufgeschwindigkeit im ersten und/oder zweiten Aufnahmebereich sehr viel kleiner als in den jeweiligen Zuflüssen ist, und zwar so, dass sich eine Schichtung des ersten und/oder zweiten Mediums im jeweiligen Aufnahmebereich gemäß der temperaturbedingten Dichte einstellt.

4. Heizsystem nach Anspruch 3,
**dadurch gekennzeichnet, dass**
das Heizsystem mindestens einen Speicher (10,27) und/oder ein Heizungsrücklaufberuhigungsmodul (18) umfasst, die insbesondere getrennt voneinander ausgebildet sind, und/oder
**dadurch gekennzeichnet, dass**
der Speicher (10, 27) und/oder das Heizungsrücklaufberuhigungsmodul (18) so aufgebaut sind, dass sich das jeweilige Wärmeträgermedium darin selbstständig geschichtet gemäß der temperaturabhängigen Dichte lagert.

5. Heizsystem für die Raumheizung und/oder Warmwasserbereitung, insbesondere nach einem der vorhergehenden Ansprüche, mit einem Heizkreislauf, durch den ein Heizmedium geführt wird und in dem Heizelemente (14) angeordnet sind, bei denen das Heizmedium Wärmeenergie abgibt,
**dadurch gekennzeichnet, dass**
im Kreislauf in Durchlaufrichtung nach den Heizelementen ein Heizungsrücklaufberuhigungsmodul (18) angeordnet ist, wobei das Heizungsrücklaufberuhigungsmodul mit einer Wärmequelle gekoppelt ist, die ein Heizmedium mit hoher Temperatur aufweist, und zwar so, dass das Heizmedium der Wärmequelle bei gegenüber dem Heizmedium im Heizungsrücklaufberuhigungsmodul erhöhter Temperatur auf Grund der Schwerkraft in das Heizungsrücklaufberuhigungsmodul fließen kann, und wobei bei dem Heizungsrücklaufberuhigungsmodul (18) der Strömungsquerschnitt gegenüber dem Heizkreislauf so stark erhöht ist, dass die Durchlaufgeschwindigkeit sehr viel kleiner als im übrigen Heizkreislauf ist, und zwar so, dass sich eine Schichtung des Heizmediums im Heizungsrücklaufberuhigungsmodul gemäß der temperaturbedingten Dichte einstellt.

6. Heizsystem nach Anspruch 7,
**dadurch gekennzeichnet, dass**
die Wärmequelle ein Wärmetauscher (4) eines Solarheizsystems und/oder eines Abwasserwärmerückgewinnungsystems ist und/oder
**dadurch gekennzeichnet, dass**
das Heizsystem mindestens einen Speicher (10,27) und/oder weitere Wärmetauscher (21) umfasst, wobei ein Wärmetauscher (4,21) und/oder ein Speicher (10,27) insbesondere so aufgebaut sind, dass das Wärmeträgermedium sich darin selbstständig geschichtet gemäß der temperaturabhängigen Dichte lagert.

7. Heizsystem nach einem der vorhergehenden Ansprüche,
**dadurch gekennzeichnet, dass**
ein Wärmetauscher (4,21) und ein Speicher (10,27) und optional vorgesehene weitere Module, wie weitere Wärmetauscher oder Speicher zumindest teilweise miteinander verbunden sind, sodass sich eine selbständige Schichtung des Wärmeträgermediums gemäß der temperaturabhängigen Dichte zumindest teilweise über die Module hinweg ergibt, und/oder
**dadurch gekennzeichnet, dass**
Wärmetauscher (4) und Speicher (10) und optional vorgesehene weitere Module, wie weitere Wärmetauscher (21) oder Speicher (27), oder das Heizungsrücklaufberuhigungsmodul (18) zumindest teilweise so miteinander verbunden sind, dass das Wärmeträgermedium zwischen den verbundenen Modulen auf Grund der temperaturabhängigen Dichte, insbesondere ausschließlich auf Grund des Schwerkraftantriebs bewegt wird und/oder eine Zirkulation ermöglicht wird, und/oder
**dadurch gekennzeichnet, dass**
das Heizsystem mehrere Wärmetauschermodule (4,21) umfasst, die miteinander gekoppelt sind, und/oder
**dadurch gekennzeichnet, dass**
die Wärmetauschermodule (4,21) seriell und/oder parallel zueinander geschaltet sind.

8. Wärmetauscher, insbesondere für die Raumheizung und/oder Warmwasserbereitung und/oder Wärmerückgewinnung, insbesondere für ein Solarheizsystem oder ein Abwasserwärmerückgewinnungssystem, mit einem ersten Aufnahmebereich (7,22) für ein erstes Medium, welches von einer Wärmequelle erwärmt werden kann, und einem zweiten Aufnahmebereich (8,23) für ein zweites Medium, welches die Wärme von dem ersten Medium aufnimmt, speichert und an Verbraucher abgibt,
**dadurch gekennzeichnet, dass**
der erste Aufnahmebereich und/oder der zweite Aufnahmebereich in ihrem Strömungsquerschnitt gegenüber dem Strömungsquerschnitt der jeweiligen Zuflüsse so stark vergrößert sind, dass die Durchlaufgeschwindigkeit im ersten und/oder zweiten Aufnahmebereich sehr viel kleiner als in den jeweiligen Zuflüssen ist, und zwar so, dass sich eine Schichtung des ersten und/oder zweiten Mediums im jeweiligen Aufnahmebereich gemäß der temperaturbedingten Dichte einstellt.

9. Wärmespeicher, insbesondere für die Raumheizung und/oder Warmwasserbereitung zur Speicherung von Wärmeenergie oder einer Flüssigkeit mit gegenüber der Umgebung erhöhter Temperatur, wobei der Wärmespeicher einen wärmeisolierten Behälter aufweist, der einen Zufluss im Bereich der Behälterunterseite und einen Abfluss im Bereich der Behälteroberseite aufweist, wobei der Abfluss (17) als Wärmesiphon ausgeführt ist, welcher in einem Bogen aus dem Behälterinnenraum der Schwerkraft folgend nach unten geführt ist und mindestens einen Abschnitt mit einem vertikalen Richtungsanteil aufweist, so dass ein Rückfluss aus dem Abfluss nur durch einen der Schwerkraft entgegen gerichteten Anstieg möglich ist.

10. Wärmespeicher, insbesondere für die Raumheizung und/oder Warmwasserbereitung zur Speicherung von Wärmeenergie oder einer eines Wärmeträgermediums mit gegenüber der Umgebung erhöhter Temperatur, wobei der Wärmespeicher einen wärmeisolierten Behälter aufweist und wobei im Behälter des Speichers keine Einbauten vorhanden sind, die eine Durchströmung in einer einzigen Richtung stören könnten.

11. Verfahren zur Übertragung und/oder Speicherung von Wärme insbesondere für die Raumheizung und/oder Warmwasserbereitung und/oder Wärmerückgewinnung, welches die Schritte umfasst:
Bereitstellung eines ersten Wärmeträgermediums, welches von einer Wärmeaufnahmestelle zu einer Wärmeabgabestelle oder umgekehrt transportiert wird, wobei das Medium in einer Leitung strömt, die einen ersten Strömungsquerschnitt aufweist,
Bereitstellung eines zweiten Strömungsquerschnitts an einer Wärmeaufnahme- oder Abgabestelle, wobei der zweite Strömungsquerschnitt viel größer ist als der erste Strömungsquerschnitt.

12. Verfahren nach Anspruch 11,
**dadurch gekennzeichnet, dass**
sich das erste Wärmeträgermedium entsprechend der temperaturabhängigen Dichte im Bereich des zweiten Strömungsquerschnitts schichtet.

13. Verfahren zur Übertragung und/oder Speicherung von Wärme, vorzugsweise für die Raumheizung und/oder Warmwasserbereitung und/oder Wärmerückgewinnung, insbesondere nach Anspruch 11 oder 12, welches die Schritte umfasst:
Bereitstellung eines Wärmeübertragungsbereichs, bei dem Wärme von einem ersten Wärmeträger auf einen zweiten Wärmeträger übertragen wird,
Bereitstellung eines Speichers oder Wärmeträgerübernahmebereichs, in denen der zweite Wärmeträger aufgenommen wird,
Schichten des Wärmeträgermediums im Wärmeübertragungsbereich und im Speicher oder
Wärmeträgerübernahmebereich entsprechend der temperaturabhängigen Dichte des zweiten Wärmeträgermediums.

14. Verfahren zum Betrieb eines Heizsystems für die Raumheizung und/oder Warmwasserbereitung und/oder Wärmerückgewinnung, insbesondere nach einem der Ansprüche 1 bis 7,
**dadurch gekennzeichnet, dass**
ein Speicher zur Aufnahme eines Wärmeträgermediums bereitgestellt wird, wobei das Wärmeträgermedium nur durch Beimischung und/oder Einzirkulation eines Wärmeträgermediums mit höheren Temperaturen erwärmt wird.

15. Verfahren zum Betrieb eines Heizsystems, insbesondere nach einem der Ansprüche 1 bis 15, vorzugsweise nach Anspruch 26,
**dadurch gekennzeichnet, dass**
ein Wärmeträgermedium Sonnenenergie aufnimmt und auf ein Verbrauchsmedium überträgt, wobei die Temperatur des Wärmeträgermediums unter 25°C, insbesondere unter 20°C liegen kann.
